# EUROPEAN PATENT SPECIFICATION

(11) **EP 2 508 558 B1**
(45) Date of publication and mention of the grant of the patent: **21.05.2014**
(21) Application number: 11161487.1
(22) Date of filing: 07.04.2011
(51) Int. Cl.: C08K 5/54, C08L 43/04, H01B 7/00

(54) **Silane crosslinkable polymer composition**
Silanvernetzbare Polymerzusammensetzung
Composition de polymère réticulable au silane

(43) Date of publication of application: 10.10.2012
(73) Proprietor: Borealis AG, 1220 Vienna (AT)
(72) Inventor: Sultan, Bernt-Åke, SE-444 42, Stenungsund (SE); Dahlen, Kristian, 44460, Stora Höga (SE); Anker, Martin, 42543, Hisings Kärra (SE); Nylander, Perry, 41261, Göteborg (SE); Fagrell, Ola, SE-444 45, Stenungsund (SE)
(74) Representative: Campbell, Neil Boyd

(56) References cited:
- EP-A1- 1 849 816
- EP-A1- 2 251 365

## Description

The present invention relates to a polymer composition comprising a silane crosslinkable polyolefin with hydrolysable silane groups, to a use of the polymer composition for producing an article, preferably a layer of a cable, to a process for producing an article, preferably a cable comprising a conductor surrounded by at least one layer comprising said polymer composition, as well as to a crosslinkable and crosslinked cable comprising a conductor surrounded by at least one layer comprising said polymer composition.

In wire and cable (W&C) applications a typical cable comprises a conductor surrounded by one or more layers of polymeric materials. The cables are commonly produced by extruding the layers on a conductor. One or more of said layers are often crosslinked to improve i.a. deformation resistance at elevated temperatures, as well as mechanical strength and/or chemical resistance, of the layer(s) of the cable.

Crosslinking of the polymers can be effected e.g. by free radical reaction using irradiation or using a crosslinking agent which is a free radical generating agent; or via hydrolysable silane groups present in the polymer using a condensation catalyst in the presence of water.

Power cable is defined to be a cable transferring energy operating at any voltage level. The voltage applied to the power cable can be alternating (AC), direct (DC) or transient (impulse). Moreover, power cables are typically indicated according to their level of operating voltage, e.g. a low voltage (LV), a medium voltage (MV), a high voltage (HV) or an extra high voltage (EHV) power cable, which terms are well known. LV power cable typically operates at voltages of below 3 kV. MV and HV power cables operate at higher voltage levels and in different applications than LV cables. A typical MV power cable, usually operates at voltages from 3 to 36 kV, and a typical HV power cable at voltages higher than 36 kV. EHV power cable operates at voltages which are even higher than typically used for HV power cable applications. LV power cable and in some embodiment medium voltage (MV) power cables usually comprise an electric conductor which is coated with an insulation layer. Typically MV and HV power cables comprise a conductor surrounded at least by an inner semiconductive layer, an insulation layer and an outer semiconductive layer, in that order.

Silane cured materials are used today primarily as insulation layer in low voltage cables and as insulation and semiconductive layer in medium and to some extent also for high voltage cables. Other suitable application areas are automotive and appliance wire insulation, communication cable insulation and as sheathing compounds for communication and power cables. The material is also suitable for pipes, injection moulded articles and films.

In case the polymer composition is crosslinkable via hydrolysable silane groups, then the hydrolysable silane groups may be introduced into the polymer by copolymerisation of a monomer, e.g. an olefin, together with a silane group containing comonomer or by grafting silane groups containing compound to a polymer. Grafting is a chemical modification of the polymer by addition of silane groups containing compound usually in a radical reaction. Such silane groups containing comonomers and compounds are well known in the field and e.g. commercially available. The hydrolysable silane groups are typically then crosslinked by hydrolysis and subsequent condensation in the presence of a silanol condensation catalyst and H₂O in a manner known in the art. Silane crosslinking techniques are known and described e.g. in US 4,413,066, US 4.297,310, US 4,351,876, US 4,397,981, US 4,446,283 and US 4,456,704.

Silane crosslinkable co-polymers used in W&C applications, especially in cable applications where the thickness of the insulation layer exceeds 0,7 mm, have typically a melt flow rate determined according to ISO 1133 at 190 °C and at a load of 2.16 kg (MFR₂) of about 1.0 g/10 min or more. The crosslinking time of such layer is relatively long and therefore the silane crosslinking of such cables is often carried out at elevated temperatures in so called sauna or water bath.

EP193317 of Borealis discloses a silane crosslinkable polymer composition comprising copolymers of ethylene with 0.1-5 wt% of hydrolysable silane comonomer (in examples 5.5-0.08 wt%) and a silane compound having a hydrolysable silane group for preventing condensation reaction in the extruder and consequent surface unevenness. MFR of the polymers are not specified.

EP1528574 of Borealis discloses polyolefin with polar groups for LV power cable applications with improved adhesion and mechanical properties and easy processability. The polymers can be peroxide or silane crosslinkable, both exemplified. In the experimental part the hydrolysable silane groups containing polymers have an MFR₂ between 0.8-4.5 g/10 min and silane content between 0.23-0.43 mol%. The presence or absence of a scorch retarder has not been specified.

EP1824926 of Borealis discloses a polymer composition comprising a silane crosslinkable polyethylene with hydrolysable silane compounds (silane content of 0.1-10 wt%) and having a specific branching parameter (g') value. The polymer composition has an advantage that in the W&C applications the need of preheating the conductor or a tube on the die can be minimised or avoided. The polymers used in the examples of the EP '926 have a MFR₂ between 0.9-2.0 g/10 min and a silane content of 1.3 or 1.8 wt%.

WO2009059670 of Dow is focused on a tin based catalyst for crosslinking hydrolysable silane groups containing polymers. The silane groups containing polymers specified in the examples have an MFR₂ of 0.9 and 7 g/10 min and a silane content of 1.3, and, respectively, of 1.8 wt%.

The object of the present invention is to provide a further silane crosslinkable polymer composition with a property balance which for instance enables to improve the crosslinking step in an article production, preferably in a power cable production, and particularly in a LV, MV and HV cable production, where more demanding crosslinking conditions and/or time is required due to the thickness of the insulation layer.

### Description of the invention

Accordingly, the present invention provides a polymer composition which comprises
- a crosslinkable polyolefin (a) bearing hydrolysable silane group(s) containing units and having an melt flow rate, MFR₂, of less than 0.80 g/10 min (according to ISO 1133 at 190 °C and at a load of 2.16 kg), and
- a scorch retarding compound.

The polymer composition of the invention as defined above or below is referred herein also shortly as "polymer composition". As to the components of the polymer composition, the polyolefin (a) bearing hydrolysable silane group(s) containing units is referred herein interchangeably also as "hydrolysable silane group(s) bearing polyolefin (a)", "silane group(s) bearing polyolefin (a)" or shortly as "polyolefin (a)" and the scorch retarding compound as SR compound. At least the polyolefin (a) of the polymer composition is crosslinkable.

The polyolefin (a) of the invention with reduced MFR provides in the presence of a silanol condensation catalyst a surprisingly improved crosslinking behaviour of the silane crosslinkable polymer composition. For instance the crosslinking speed of the polymer composition of the invention, which can be expressed as the well known hot set elongation property, is markedly increased compared to silane crosslinkable polymer composition comprising a polyolefin with a conventional MFR₂ (of 1.0 g/10 min or more). Moreover, the silane crosslinked polymer composition of the invention has a surprisingly low, i.e. improved, final hot set elongation value (when measured as described below under "Determination methods"). Moreover, when the polyolefin (a) is combined with the SR compound of the invention, then surprisingly the high crosslinking speed can be maintained in essentially the same level as without using the SR compound. This unpredictable in view of the prior art, since there is typically a decrease in crosslinking speed, when a SR compound is used in a conventional silane crosslinkable polymer composition. Accordingly, the polyolefin (a) can be combined with SR compound without sacrificing the crosslinking speed and without sacrificing the final hot set value. As a result the crosslinking conditions can be milder and/or crosslinking time reduced. For instance, LV, MV or HV cables comprising a thick insulation layer of the polymer composition of the invention can be crosslinked, if desired, in ambient temperatures and/or at shorter time. As a result the cable production process can be effected in a simplified and cost-saving manner. The invention is particularly preferable e.g. for a LV power cable when the thickness of the insulation layer exceeds 0.7 mm, e.g. exceeds up to 3 mm. However, also in case of thicker insulation layers which are typical for MV or HV power cables, the polymer composition of the invention accelerates the crosslinking of the MV or HV power cable even when effected in sauna or a water bath. The invention is also advantageous for thinner insulations e.g. for appliance and automotive wires in which the insulation thickness commonly is below 0.7 mm. These wires are rapidly cured at ambient conditions. Finally, the components of the polymer composition can be feasibly extruded to form a layer of a cable which is then crosslinked in shorter time and/or milder conditions to obtain a crosslinked cable with very good surface properties. The properties mentioned above are measured using methods described under the "Determination methods".

The polyolefin (a) of the polymer composition preferably has an MFR₂ of 0.15 to 0.75 g/10 min, more preferably from 0.15 to 0.70 g/10 min, more preferably from 0.20 to 0.65 g/10 min, more preferably from 0.25 to 0.65 g/10 min, even more preferably from 0.3 to 0.60 g/10 min. Further preferable subgroups and embodiments of the polyolefin (a) component of the invention is described under "polyolefin (a)".

In a preferable embodiment the polymer composition has a hot set elongation of 180%, more preferably of less than 150%, more preferably of less than 130%, more preferably of less than 100%, when measured according to "Hot set elongation test" using a crosslinked cable sample as described under "Determination methods" after crosslinking the sample in water at 90°C for 20 hours.

Unexpectedly in the present invention, also the amount of the hydrolysable silane group(s) containing units of the polyolefin (a) with low MFR₂ can be reduced in the presence of the SR compound while still achieving the advantageous properties of the invention. Moreover, the reduction of the amount of the hydrolysable silane group(s) surprisingly improves the storage stability in terms of mechanical properties. The storage stability of the mechanical properties is indicated herein e.g. as less impaired elongation at break property after ageing (measured as described below under "Determination methods"). This embodiment can be very desirable due to possibility to reduce the number of hydrolysable silane group(s) containing units. Accordingly, in a more preferable embodiment of the invention, the polyolefin (a) of polymer composition has hydrolysable silane group(s) containing units in an amount of from 0.010 to 0.15 mol/kg polyolefin (a), when measured according to "The content of hydrolysable silane group(s)" as described under "Determination methods". The range 0.010 to 0.15 mol/kg polyolefin (a) corresponds to 0.2 to 2.2 wt% of vinyl trimethoxy silane derived units based on the total amount of the polyolefin (a).

The amount of the hydrolysable silane group(s) containing units present in the polyolefin (a) is more preferably from 0.020 to 0.135 mol/kg polyolefin (a), more preferably from 0.025 to 0.11 mol/kg polyolefin (a), more preferably from 0.030 to 0.10 mol/kg polyolefin (a), more preferably from 0.030 to 0.095mol/kg polyolefin (a), more preferably from 0.035 to 0.085 mol/kg polyolefin (a). Depending on end applications, even as low amounts of the hydrolysable silane group(s) containing units present in the polyolefin (a) as from 0.034 to 0.080 mol/kg polyolefin (a), such as from 0.040 to 0.075 mol/kg polyolefin (a) may be desired and would then be preferable.

Preferably, and particularly preferably in the above embodiment, where the polyolefin (a) of polymer composition contains hydrolysable silane group(s) containing units as defined above, the polymer composition has preferably an elongation at break of 250% or more, preferably of 300% or more, preferably of 330% or more, preferably of 350% or more, more preferably from 370 to 700%, more preferably from 380 to 700%, when measured from a crosslinked cable sample after crosslinking the sample at ambient conditions for 21 days according to "Determination of mechanical properties prior and after thermo oxidative ageing" as described below under "Determination methods". In the above definition the elongation at break is measured without effecting the thermo oxidative ageing of the cable sample.

A preferable silane group(s) containing unit present in the polyolefin (a) is a silane compound of formula (I) as defined below under "Polyolefin (a)". Even more preferably the hydrolysable silane group(s) containing unit present in the polyolefin (a) is a silane compound of formula (II) as defined below under "Polyolefin (a)" including the preferable subgroups and embodiments thereof.

The SR compound component of the polymer composition is described later below (under "SR compound") in more details including the preferable subgroups and embodiments thereof.

The polymer composition of the invention is highly useful for producing an article, preferably at least one layer of a cable. Moreover, the polyolefin (a) of the polymer composition in the formed layer is most preferably crosslinked before the end use of the cable. The crosslinking is carried out in the presence of silanol condensation catalyst and water. Accordingly, the silane group(s) containing units present in the polyolefin (a) are hydrolysed under the influence of water in the presence of the silanol condensation catalyst resulting in the splitting off of alcohol and the formation of silanol groups, which are then crosslinked in a subsequent condensation reaction wherein water is split off and Si-O-Si links are formed between other hydrolysed silane groups present in said polyolefin (a). The crosslinked polymer composition has a typical network, i.a. interpolymer crosslinks (bridges), as well known in the field. The silanol condensation catalyst useful for the present invention are either well known and commercially available, or can be produced according to or analogously to a literature described in the field.

Accordingly, it is preferred that the polymer composition further comprises a silanol condensation catalyst. In this context it means that the polymer composition may comprise the silanol condensation catalyst before it is used to form an article, preferably a cable layer or the silanol condensation catalyst compound may be introduced to the polymer composition after the article, preferably cable layer, formation, e.g. during the crossliking step of the formed article, preferably formed cable.

The silanol condensation catalyst, is preferably selected from carboxylates of metals, such as tin, zinc, iron, lead and cobalt; from a titanium compound bearing a group hydrolysable to a Brönsted acid (preferably as described in the EP Application, no. EP10166636.0, not yet published, and included herein as reference), from organic bases; from inorganic acids; and from organic acids; more preferably from carboxylates of metals, such as tin, zinc, iron, lead and cobalt, from titanium compound bearing a group hydrolysable to a Brönsted acid as defined above or from organic acids. The silanol condensation catalyst is more preferably selected from DBTL, DOTL, particularly DOTL; titanium compound bearing a group hydrolysable to a Brönsted acid as defined above; or an aromatic organic sulphonic acid, which is preferably an organic sulphonic acid which comprises the structural element:

Ar(SO₃H)ₓ (II)

wherein Ar is an aryl group which may be substituted or non-substituted, and if substituted, then preferably with at least one hydrocarbyl group up to 50 carbon atoms, and x is at least 1; or a precursor of the sulphonic acid of formula (II) including an acid anhydride thereof or a sulphonic acid of formula (II) that has been provided with a hydrolysable protective group(s), e.g. an acetyl group that is removable by hydrolysis.

Such organic sulphonic acids are described e.g. in EP736065, or alternatively, in EP1309631 and EP1309632.

The preferred silanol condensation catalyst is an aromatic sulphonic acid, more preferably the aromatic organic sulphonic acid of formula (II). Said preferred sulphonic acid of formula (II) as the silanol condensation catalyst may comprise the structural unit according to formula (II) one or several times, e.g. two or three times (as a repeating unit (II)). For example, two structural units according to formula (II) may be linked to each other via a bridging group such as an alkylene group.

More preferably, the organic aromatic sulphonic acid of formula (II) as the preferred silanol condensation catalyst has from 6 to 200 C-atoms, more preferably from 7 to 100 C-atoms.

More preferably, in the sulphonic acid of formula (II) as the preferred silanol condensation catalyst, x is 1, 2 or 3, and more preferably x is 1 or 2. More preferably, in the sulphonic acid of formula (II) as the preferred silanol condensation catalyst, Ar is a phenyl group, a naphthalene group or an aromatic group comprising three fused rings such as phenantrene and anthracene.

Non-limiting examples of the even more preferable sulphonic acid compounds of formula (II) are p-toluene sulphonic acid, 1-naphtalene sulfonic acid, 2-naphtalene sulfonic acid, acetyl p-toluene sulfonate, acetylmethane-sulfonate, dodecyl benzene sulphonic acid, octadecanoyl-methanesulfonate and tetrapropyl benzene sulphonic acid; which each independently can be further substituted.

Even more preferred sulphonic acid of formula (II) is substituted, i.e. Ar is an aryl group which is substituted with at least one C1 to C30-hydrocarbyl group. In this more preferable subgroup of the sulphonic acid of formula (II), it is furthermore preferable that Ar is a phenyl group and x is at least one (i.e. phenyl is substituted with at least one -S(=O)₂OH), more preferably x is 1, 2 or 3; and more preferably x is 1 or 2 and Ar is phenyl which is substituted with at least one C3-20-hydrocarbyl group. Most preferred sulphonic acid (II) as the silanol condensation catalyst is tetrapropyl benzene sulphonic acid and dodecyl benzene sulphonic acid, more preferably dodecyl benzene sulphonic acid.

The amount of the silanol condensation catalyst is typically 0.00001 to 0.1 mol/kg polymer composition preferably 0.0001 to 0.01 mol/kg polymer composition, more preferably 0.0005 to 0.005 mol/kg polymer composition. The choice of the catalyst and the feasible amount thereof depends on the end application and is well within the skills of a skilled person.

The polymer composition may contain further component(s), such as further polymer component(s), like miscible thermoplastic(s); additive(s), such as antioxidant(s), further stabilizer(s), e.g. water treeing retardant(s); lubricant(s), foaming agent(s) or colorant(s); filler(s), such a conductive filler.

The total amount of further polymer component(s), if present, is typically up to 60 wt%, preferably up 50 wt%, preferably up 40 wt %, more preferably from 0.5 to 30 wt% , preferably from 0.5 to 25 wt%, more preferably from 1.0 to 20 wt%, based on the total amount of the polymer composition.

The total amount of additive(s), if present, is generally from 0.01 to 10 wt%, preferably from 0.05 to 7 wt%, more preferably from 0.2 to 5 wt%, based on the total amount of the polymer composition.

As to additives, the polymer composition preferably comprises antioxidant(s), preferably neutral or acidic antioxidant(s) which preferably comprise a sterically hindered phenol group(s) or aliphatic sulphur group(s). Examples of suitable antioxidants for stabilisation of polyolefins containing hydrolysable silane groups which are crosslinked with a silanol condensation catalyst, in particular an acidic silanol condensation catalyst are disclosed in EP 1254923. Other preferred antioxidants are disclosed in WO 2005003199A1. Preferably, the antioxidant is present in the composition in an amount of from 0.01 to 3 wt%, more preferably 0.05 to 2 wt%, and most preferably 0.08 to 1.5 wt%, based on the total amount of the polymer composition.

As to further additives, the polymer composition may comprise a colorant which is then typically added to the composition in form of a color master batch. Such color master batches may be commercially available or may be prepared in a conventional manner by combining the colorant with a carrier medium. The amount of colorant master batch, if present, is preferably up to 5wt%, more preferably from 0.1 to 3 wt%, based on the total amount of the polymer composition.

Moreover, the polymer composition may comprise a filler(s), e.g. a conductive filler, such as a conductive carbon black, if used as semiconductive compositions; or a flame retardant filler(s), such as magnesium or aluminium hydroxide, if used as flame retardant composition; or a UV protecting filler(s), such as UV-carbon black or UV stabiliser, if used as UV-stabilised composition; or any combination(s) thereof. The amount of the filler in general depends on the nature of the filler and the desired end application, as evident for a skilled person. E.g. when the polymer composition comprises conductive filler, then the amount thereof is of up to 65 wt%, preferably from 5 to 50 wt%, based on the total amount of the polymer composition.

The amount of polyolefin (a) in the polymer composition of the invention is typically of at least 35 wt%, preferably of at least 40 wt%, preferably of at least 50 wt%, preferably of at least 75 wt%, more preferably of from 80 to 100 wt% and more preferably of from 85 to 100 wt%, based on the total amount of the polymer component(s) present in the polymer composition. The preferred polymer composition consists of polyolefin (a) as the only polymer components. The expression means that the polymer composition does not contain further polymer components, but the polyolefin (a) as the sole polymer component. However, it is to be understood herein that the polymer composition may comprise further component(s) other than the polyolefin (a) component, such as additive(s) which may optionally be added in a mixture with a carrier polymer in a so called master batch.

The amount of the SR compound of the polymer composition is typically at least 0.001 mol/kg polymer composition, preferably 0.001 to 0.2 mol/kg polymer composition, more preferably from 0.005 to 0.15 mol/kg polymer composition, more preferably from 0.01 to 0.1 mol/kg polymer composition, more preferably from 0.02 to 0.08 mol/kg polymer composition and most preferably form 0.02 to 0.05 mol/kg polymer composition.

The invention further provides an article, preferably a cable comprising a conductor surrounded by at least one layer comprising a polymer composition of the invention which comprises
- a polyolefin (a) bearing hydrolysable silane group(s) containing units and having an MFR₂ of less than 0.80 g/10 min (according to ISO 1133 at 190 °C and at a load of 2.16 kg), and
- a scorch retarding compound; as defined above or below, preferably a power cable selected from
- a cable (A) comprising a conductor surrounded by at least an insulating layer comprising a polymer composition of the invention which comprises
- a polyolefin (a) bearing hydrolysable silane group(s) containing units and having an MFR₂ of less than 0.80 g/10 min (according to ISO 1133 at 190 °C and at a load of 2.16 kg), and
- a scorch retarding compound; as defined above or below, or
- a cable (B) comprising a conductor surrounded by an inner semiconductive layer, an insulating layer and an outer semiconductive layer, wherein at least one layer, preferably at least the insulation layer, comprises a polymer composition of the invention which comprises
- a polyolefin (a) bearing hydrolysable silane group(s) containing units and having an MFR₂ of less than 0.80 g/10 min (according to ISO 1133 at 190 °C and at a load of 2.16 kg), and
- a scorch retarding compound; as defined above or below. The cable of the invention is described below in more details under "End use of the polymer composition".

The following preferable embodiments, properties and subgroups of the components, namely polyolefin (a) and the SR compound, are independently generalisable so that they can be used in any order or combination to further define the preferable embodiments of the polymer composition and the cable of the invention. Moreover, unless otherwise stated, it is evident that the given polyolefin (a) descriptions apply to the polyolefin prior optional crosslinking.

### Polyolefin (a) (= polyolefin (a) bearing hydrolysable silane group(s) containing units)

Where herein it is referred to a "polyolefin", such as polyethylene, this is intended to mean both a homopolymer and copolymer of an olefin, such as a homopolymer and copolymer ethylene.

The hydrolysable silane groups may be introduced into the polyolefin of polyolefin (a) by copolymerisation of an olefin, e.g. ethylene, monomer with at least a silane group(s) containing comonomer or by grafting a silane group(s) containing compound to the polyolefin. Grafting is preferably effected by radical reaction, e.g. in the presence of a radical forming agent (such as peroxide). Both techniques are well known in the art.

Preferably, the polyolefin (a) bearing hydrolysable silane group(s) containing units is a copolymer of an olefin with a hydrolysable silane group(s) bearing comonomer and, optionally, with one or more other comonomer(s); or is a homopolymer or copolymer of an olefin wherein the silane group(s) containing units are introduced by grafting a to the polyolefin polymer.

As well known "comonomer" refers to copolymerisable comonomer units.

The silane group(s) containing comonomer for copolymerising silane groups or the silane group(s) containing compound for grafting silane groups to produce polyolefin (a) is preferably an unsaturated silane compound represented by the formula

R¹SiR²_{q}Y_{3-q} (I)

wherein
R¹ is an ethylenically unsaturated hydrocarbyl, hydrocarbyloxy or (meth)acryloxy hydrocarbyl group,
each R² is independently an aliphatic saturated hydrocarbyl group,
Y which may be the same or different, is a hydrolysable organic group and
q is 0, 1 or 2.

Special examples of the unsaturated silane compound are those wherein R¹ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and R², if present, is a methyl, ethyl, propyl, decyl or phenyl group.

Further suitable silane compounds are e.g. gamma-(meth)acryloxypropyl trimethoxysilane, gamma(meth)acryloxypropyl triethoxysilane, and vinyl triacetoxysilane, or combinations of two or more thereof.

A preferred unsaturated silane compound is represented by the formula

CH₂=CHSi(OA)₃ (II)

wherein each A is independently a hydrocarbyl group having 1-8 carbon atoms, preferably 1-4 carbon atoms.

Preferred compounds are vinyl trimethoxysilane, vinyl bismethoxyethoxysilane, vinyl triethoxysilane.

As mentioned above, the amount of the hydrolysable silane group(s) containing units present in the polyolefin (a) is preferably from 0.010 to 0.15 mol/kg polyolefin (a), more preferably from 0.020 to 0.135 mol/kg polyolefin (a), more preferably from 0.025 to 0.11 mol/kg polyolefin (a), more preferably from 0.030 to 0.10 mol/kg polyolefin (a), more preferably from 0.030 to 0.095mol/kg polyolefin (a), more preferably from 0.035 to 0.085 mol/kg polyolefin (a). Depending on end applications, even as low amounts of the hydrolysable silane group(s) containing units present in the polyolefin (a) as from 0.034 to 0.080 mol/kg polyolefin (a), such as from 0.040 to 0.075 mol/kg polyolefin (a) may be desired and would then be preferred.

A suitable polyolefin for the polyolefin (a) bearing hydrolysable silane group(s) containing units can be any polyolefin, such as any conventional polyolefin, which can be used for producing a cable layer of a cable of the present invention. For instance such suitable conventional polyolefins are as such well known and can be e.g. commercially available or can be prepared according to or analogously to known polymerization processes described in the chemical literature.

The polyolefin (a) for the polymer composition is preferably selected from a polypropylene (PP) or polyethylene (PE), preferably from a polyethylene, bearing hydrolysable silane group(s) containing units.

In case a polyolefin (a) is a copolymer of ethylene with at least one comonomer other than silane group(s) containing comonomer (referred herein also shortly as "other comonomer") and wherein the silane group(s) containing units are incorporated by grafting or copolymerizing with a silane group(s) containing comonomer, then suitable such other comonomer is selected from non-polar comonomer(s) or polar comonomer(s), or any mixtures thereof. Preferable other non-polar comonomers and polar comonomers are described below in relation to polyethylene produced in a high pressure process.

Preferable polyolefin (a) is a polyethylene produced in the presence of an olefin polymerisation catalyst or a polyethylene produced in a high pressure process and which bears hydrolysable silane group(s) containing units.

"Olefin polymerisation catalyst" means herein preferably a conventional coordination catalyst. It is preferably selected from a Ziegler-Natta catalyst, single site catalyst which term comprises a metallocene and a non-metallocene catalyst, or a chromium catalyst, or a Vanadium catalyst or any mixture thereof. The terms have a well known meaning.

Polyethylene polymerised in the presence of an olefin polymerisation catalyst in a low pressure process is also often called as "low pressure polyethylene" to distinguish it clearly from polyethylene produced in a high pressure process. Both expressions are well known in the polyolefin field. Low pressure polyethylene can be produced in polymerisation process operating i.a. in bulk, slurry, solution, or gas phase conditions or in any combinations thereof. The olefin polymerisation catalyst is typically a coordination catalyst.

More preferably, the polyolefin (a) is selected from a homopolymer or a copolymer of ethylene produced in the presence of a coordination catalyst or produced in a high pressure polymerisation process, which bears hydrolysable silane group(s) containing units.

In a first embodiment of the polyolefin (a) of the polymer composition of the invention, the polyolefin (a) is a low pressure polyethylene (PE) bearing the hydrolysable silane group(s) containing units. Such low pressure PE is preferably selected from a very low density ethylene copolymer (VLDPE), a linear low density ethylene copolymer (LLDPE), a medium density ethylene copolymer (MDPE) or a high density ethylene homopolymer or copolymer (HDPE), which bears hydrolysable silane group(s) containing units. These well known types are named according to their density area. The term VLDPE includes herein polyethylenes which are also known as plastomers and elastomers and covers the density range of from 850 to 909 kg/m³. The LLDPE has a density of from 909 to 930 kg/m³, preferably of from 910 to 929 kg/m³, more preferably of from 915 to 929 kg/m³. The MDPE has a density of from 930 to 945 kg/m³, preferably 931 to 945 kg/m³ The HDPE has a density of more than 945 kg/m³, preferably of more than 946 kg/m³, preferably form 946 to 977 kg/m³, more preferably form 946 to 965 kg/m³. More preferably such low pressure copolymer of ethylene for the polyolefin (a) is copolymerized with at least one comonomer selected from C3-20 alpha olefin, more preferably from C4-12 alpha-olefin, more preferably from C4-8 alpha-olefin, e.g. with 1-butene, 1-hexene or 1-octene, or a mixture thereof. The amount of comonomer(s) present in a PE copolymer is from 0.1 to 15 mol%, typically 0.25 to 10 mol-%.

Moreover, in case the polyolefin (a) is a low pressure PE polymer bearing the hydrolysable silane group(s) containing units, then such PE can be unimodal or multimodal with respect to molecular weight distribution (MWD= Mw/Mn). Generally, a polymer comprising at least two polymer fractions, which have been produced under different polymerization conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions.

"Polymer conditions" mean herein any of process parameters, feeds and catalyst system.

Unimodal low pressure PE can be produced by a single stage polymerisation in a single reactor in a well known and documented manner. The multimodal PE can be produced in one polymerisation reactor by altering the polymerisation conditions and optionally the catalyst, or, and preferably, in the multistage polymerisation process which is conducted in at least two cascaded polymerisation zones. Polymerisation zones may be connected in parallel, or preferably the polymerisation zones operate in cascaded mode. In the preferred multistage process a first polymerisation step is carried out in at least one slurry, e.g. loop, reactor and the second polymerisation step in one or more gas phase reactors. One preferable multistage process is described in EP517868.

A LLDPE or MDPE as defined above or below are preferable type of low pressure PE for polyolefin (a), more preferably a LLDPE copolymer as defined above or below. Such LLDPE can unimodal or multimodal.

The silane group(s) containing units can be incorporated to the low pressure polyethylene by grafting or by copolymerizing ethylene with a silane group(s) containing comonomer and optionally with other comonomer(s), which is preferably a non-polar comonomer. Preferable hydrolysable silane groups bearing low pressure PE as the polyolefin (a) is a homopolymer of ethylene, MDPE copolymer or a LLDPE copolymer, more preferably LLDPE copolymer, wherein the silane group(s) are incorporated by grafting a silane group(s) containing compound.

MFR₂ (2.16 kg, 190 °C) of the low pressure PE polymer bearing hydrolysable silane group(s) containing units as the polyolefin (a), is as given above under the "Description of the invention" including the preferred subgroups thereof.

In a second embodiment of the polyolefin (a) of the invention, the polyolefin (a) is a polyethylene which is produced in a high pressure polymerisation (HP) process and bears hydrolysable silane group(s) containing units. In this embodiment the polyethylene is preferably produced in a high pressure polymerisation process in the presence of an initiator(s), more preferably is a low density polyethylene (LDPE) bearing hydrolysable silane group(s) containing units. It is to be noted that a polyethylene produced in a high pressure (HP) process is referred herein generally as LDPE and which term has a well known meaning in the polymer field. Although the term LDPE is an abbreviation for low density polyethylene, the term is understood not to limit the density range, but covers the LDPE-like HP polyethylenes with low, medium and higher densities. The term LDPE describes and distinguishes only the nature of HP polyethylene with typical features, such as different branching architecture, compared to the PE produced in the presence of an olefin polymerisation catalyst.

The polyolefin (a) according to the second embodiment is the preferred polyolefin (a) of the invention and is a polyethylene which is produced by a high pressure polymerisation (HP) and which bears hydrolysable silane group(s) containing units.

In this preferable second embodiment, such hydrolysable silane groups bearing LDPE polymer as polyolefin (a) may be a low density homopolymer of ethylene (referred herein as LDPE homopolymer) or a low density copolymer of ethylene (referred herein as LDPE copolymer) with at least one comonomer selected from the silane group(s) containing comonomer, which is preferably as defined above, or from the other comonomer as mentioned above, or any mixtures thereof. The one or more other comonomer(s) of LDPE copolymer are preferably selected from polar comonomer(s), non-polar comonomer(s) or from a mixture of polar comonomer(s) and non-polar comonomer(s), as defined above or below. Moreover, said LDPE homopolymer or LDPE copolymer as said polyolefin (a) may optionally be unsaturated.

As a polar comonomer, if present in the hydrolysable silane group(s) bearing LDPE copolymer as the polyolefin (a), such polar comonomer is preferably selected from a comonomer containing hydroxyl group(s), alkoxy group(s), carbonyl group(s), carboxyl group(s), ether group(s) or ester group(s), or a mixture thereof. Moreover, comonomer(s) containing carboxyl and/or ester group(s) are more preferable as said polar comonomer. Still more preferably, the polar comonomer(s), if present in the hydrolysable silane groups bearing LDPE copolymer as the polyolefin (a), is selected from the groups of acrylate(s), methacrylate(s) or acetate(s), or any mixtures thereof, more preferably the polar comonomer(s) is selected from the group of alkyl acrylates, alkyl methacrylates or vinyl acetate, or a mixture thereof, even more preferably from C₁- to C₆-alkyl acrylates, C₁- to C₆-alkyl methacrylates or vinyl acetate. Still more preferably, if polar comonomer(s) are present, then the hydrolysable silane groups bearing LDPE copolymer as the polyolefin (a) is a copolymer of ethylene with C₁- to C₄-alkyl acrylate, such as methyl, ethyl, propyl or butyl acrylate, or vinyl acetate, or any mixture thereof, which bears hydrolysable silane group(s) containing units.

As the non-polar comonomer, if present in the hydrolysable silane group(s) bearing LDPE copolymer as the polyolefin (a), such non-polar comonomer is other than the above defined polar comonomer. Preferably, the non-polar comonomer is other than a comonomer containing hydroxyl group(s), alkoxy group(s), carbonyl group(s), carboxyl group(s), ether group(s) or ester group(s). One group of preferable non-polar comonomers, if present in the hydrolysable silane group(s) bearing LDPE copolymer as the polyolefin (a), comprises, preferably consists of, monounsaturated (= one double bond) comonomer(s), preferably olefins, preferably alpha-olefins, more preferably C₃ to C₁₀ alpha-olefins, such as propylene, 1-butene, 1-hexene, 4-methyl-1-pentene, styrene, 1-octene, 1-nonene; polyunsaturated (= more than one double bond, such as diene) comonomer(s); or any mixtures thereof.

If the hydrolysable silane group(s) bearing LDPE polymer as the polyolefin (a) is a copolymer of ethylene with other comonomer(s), then the amount of the other comonomer(s) present in said LDPE polymer is preferably from 0.001 to 50 wt%, more preferably from 0.05 to 40 wt%, still more preferably less than 35 wt%, still more preferably less than 30 wt%, more preferably less than 25 wt%. If present, then the polar comonomer content of the polyolefin (a) is preferably at least 0.05 mol%, preferably 0.1 mol% or more, more preferably 0.2mol% or more, and at least in insulation layer applications the polar comonomer content of the polyolefin (a) is preferably not more than 10 mol%, preferably not more than 6 mol%, preferably not more than 5 mol%, more preferably not more than 2,5 mol%, based on the polyolefin (a).

In this preferred second embodiment the silane group(s) containing units can be incorporated to the high pressure polyethylene, preferably to the LDPE polymer, by grafting or by copolymerizing ethylene with a silane group(s) containing comonomer and optionally with other comonomer(s), more preferably by copolymerizing ethylene with a silane group(s) containing comonomer. In this preferred second embodiment the polyolefin (a) is most preferably a LDPE copolymer of ethylene with a silane group containing comonomer as defined above and optionally with other comonomer(s).

Typically, and preferably in wire and cable (W&C) applications, the density of the hydrolysable silane group(s) bearing LDPE polymer as the polyolefin (a), is higher than 860 kg/m³. Preferably the density of such LDPE polymer, is not higher than 960 kg/m³, and preferably is from 900 to 945 kg/m³. The MFR₂ (2.16 kg, 190 °C) of the hydrolysable silane groups bearing LDPE polymer as the polyolefin (a), is as given above under the "Description of the invention" including the preferred subgroups thereof.

Accordingly, the LDPE polymer for the polyolefin (a) is preferably produced at high pressure by free radical initiated polymerisation (referred to as high pressure (HP) radical polymerization). The HP reactor can be e.g. a well known tubular or autoclave reactor or a mixture thereof, preferably a tubular reactor. The high pressure (HP) polymerisation and the adjustment of process conditions for further tailoring the other properties of the polyolefin depending on the desired end application are well known and described in the literature, and can readily be used by a skilled person. Suitable polymerisation temperatures range up to 400 °C, preferably from 80 to 350°C and pressure from 70 MPa, preferably 100 to 400 MPa, more preferably from 100 to 350 MPa. Pressure can be measured at least after compression stage and/or after the tubular reactor. Temperature can be measured at several points during all steps.

The incorporation of hydrolysable silane group(s) containing comonomer (as well as optional other comonomer(s)) and the control of the comonomer feed to obtain the desired final content of said hydrolysable silane group(s) containing units can be carried out in a well known manner and is within the skills of a skilled person. Similarly, the MFR of the polymerized polymer can be controlled e.g. by a chain transfer agent, as well known in the field.

Further details of the production of ethylene (co)polymers by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

### The SR compound (= scorch retarding compound)

The scorch retarding compound can be any compound that has an effect of preventing the premature crosslinking (Scorch) to occur before the cable is formed. Suitable SR compound can be any known or commercially available compound with such scorch retarding effect.

The scorch retarding compound is preferably a silicon containing compound and has a structure according to the formula (III)

(R¹)ₓ[Si(R²)_{y}(R³)_{z}]ₘ (III)

wherein
R¹, which may be the same or different if more than one such group is present, is a monofunctional hydrocarbyl residue, or, if m = 2, is a bifunctional, hydrocarbyl residue, comprising from 1 to 100 carbon atoms;
R², which may be the same or different if more than one such group is present, is a hydrocarbyloxy residue comprising from 1 to 100 carbon atoms;
R³, is -R⁴SiR¹ₚR²_{q}, wherein
p is 0 to 3, preferably 0 to 2,
q is 0 to 3, preferably 1 to 3,
with the proviso that p + q is 3, and
R⁴ is -(CH₂)ᵣYₛ(CH₂)ₜ- where r and t independently are 1 to 3, s is 0 or 1 and Y is a difunctional heteroatomic group selected from -O-, -S-, -SO-, -SO₂-, -NH-, -NR¹- or -PR'-, where R¹ and R² are as previously defined; and
x is 0 to 3, y is 1 to 4, z is 0 or 1, with the proviso that x + y + z = 4;
and m = 1 or 2.

The more preferable SR compound is selected from a subgroup of a compound of formula (III), wherein R¹, which may be the same or different if more than one such group is present, is an, alkyl, alkenyl, arylalkyl, alkylaryl or aryl group containing 1 to 40 carbon atoms, with the proviso that if more than one R¹ group is present the total number of carbon atoms of the R¹ groups is at most 60.

More preferably, SR compound is selected from a subgroup (IIIa) of a compound of formula (III),

(R¹)ₓ[Si(R²)_{y}(R³)_{z}]ₘ (IIIa)

wherein
R¹ is a linear or branched C₆- to C₂₂-alkyl group or a linear or branched C₂- to C₂₂-alkenyl group;
R² is a linear or branched C₁- to C₁₀-alkoxy group;
R³, is -R⁴SiR¹ₚR²_{q}, wherein
p is 0 to 3,
q is 0 to 3,
with the proviso that p + q is 3, and
R⁴ is -(CH₂)ᵣYₛ(CH₂)ₜ- where r and t independently are 1 to 3, s is 0 or 1 and Y is a difunctional heteroatomic group selected from -O-, -S-, -SO-, -SO₂-, -NH-, -NR¹- or - PR¹-, where R¹ and R² are as previously defined; and
x is 0 to 3, y is 1 to 4, z is 0 or 1, with the proviso that x + y + z = 4;
and m = 1.

Even more preferable SR compound is a compound of formula (IIIa), wherein x = 1, y = 3, and z = 0. Most preferred SR compound is hexadecyl trimethoxy silane.

The amount of the SR compound of the polymer composition SR compound of the polymer composition is preferably 0.001 to 0.2 mol/kg polymer composition, more preferably from 0.005 to 0.15 mol/kg polymer composition, more preferably from 0.01 to 0.1 mol/kg polymer composition, more preferably from 0.02 to 0.08 mol/kg polymer composition and most preferably form 0.02 to 0.05 mol/kg polymer composition.

### End use of the polymer composition

The invention also provides an article, preferably a cable comprising a polymer composition of the invention which comprises
- a polyolefin (a) bearing hydrolysable silane group(s) containing units and having an MFR₂ of less than 0.80 g/10 min, and
- a scorch retarding compound; as defined above or below.

The preferred article is a power cable, which here also includes insulated wires for e.g. appliances and automotives, more preferably a LV, MV or HV power cable, even more preferably a LV or MV power cable, which comprises a conductor surrounded by at least one layer comprising, preferably consisting of, a polymer composition of the invention which comprises
- a polyolefin (a) bearing hydrolysable silane group(s) containing units and having an MFR₂ of less than 0.80 g/10 min, and
- a scorch retarding compound; as defined above or below.

The preferred power cable is selected from
- a cable (A) comprising a conductor surrounded by at least an insulating layer comprising, preferably consisting of, a polymer composition of the invention which comprises
- a polyolefin (a) bearing hydrolysable silane group(s) containing units and having an MFR₂ of less than 0.80 g/10 min, and
- a scorch retarding compound; as defined above or below; or
- a cable (B) comprising a conductor surrounded by an inner semiconductive layer, an insulating layer and an outer semiconductive layer, in that order, wherein at least one the layers, preferably at least the insulation layer, comprises, preferably consists of, a polymer composition of the invention which comprises
- a polyolefin (a) bearing hydrolysable silane group(s) containing units and having an MFR₂ of less than 0.80 g/10 min, and
- a scorch retarding compound; as defined above or below.

The cable (A) is preferably a LV power cable or wires intended for e.g. appliances and automotives. The cable (B) is preferably a MV power cable or a HV cable, more preferably a MV power cable.

The term "conductor" means herein above and below that the conductor comprises one or more wires. Moreover, the cable may comprise one or more such conductors. Preferably the conductor is an electrical conductor and comprises one or more metal wires.

In the preferred cable of the invention at least the insulation layer comprises the polymer composition of the invention.

The preferred embodiment is the power cable (A), which is more preferably for LV power cable applications, or the power cable (B), which is more preferably for MV power cable applications, most preferably the power cable (A) for LV power cable application. Moreover the preferred power cable (A) and (B) is an AC power cable, more preferably AC power cable (A) for LV power cable applications, or an AC power cable (B) for MV power cable applications, most preferably an AC power cable (A) for LV power cable applications.

In the embodiment of cable (B), the first and the second semiconductive compositions can be different or identical and comprise a polymer(s) which is preferably a polyolefin, or a mixture of polyolefins, and conductive filler, preferably carbon black. The polyolefin of the first and second semiconductive compostions can be any polyolefin suitable for a semiconductive layer, preferably a polyolefin as defined above for polyolefin (a), but without hydrolysable silane group(s) containing units or a polyolefin as defined above for polyolefin (a) bearing hydrolysable silane group(s) containing units. In the embodiment of cable (B), the insulating layer and at least one, preferably both, of the inner semiconductive layer and the outer semiconductive layer preferably comprise a polymer composition of the invention. In this case the polyolefin (a) and/or the SR compound of the polymer compositions of the layers can be same or different.

Insulating layers for the preferable low voltage power cables generally have a thickness of between 0.7 to 2.3 mm, dependant on the crossection of the conductor. Wires intended for automotives and appliances may have an insulation thickness down to 0.2 mm. The MV power cable insulation has typically a thickness above 5.0 mm. Naturally, the insulation layer of the HV power has higher thicknesses depending on their application area.

As well known the cable can optionally comprise further layers, e.g. layers surrounding the insulation layer or, if present, the outer semiconductive layers, such as screen(s), a jacketing layer(s), other protective layer(s) or any combinations thereof.

The cable of the invention is preferably crosslinkable and is preferably crosslinked after the formation of at least the cable layer comprising the polymer composition of the invention. Thus preferably a crosslinked cable is provided, comprising a conductor surrounded by at least one layer comprising a crosslinked polymer composition of the invention. More preferably, the crosslinked cable is a crosslinked cable (A) or a crosslinked cable (B), as defined above or below, wherein at least the layer comprising the polymer composition of the invention has been crosslinked using a silanol condensation catalyst, which is preferably an aromatic organic sulphonic acid, more preferably an organic sulphonic acid, even more preferably Ar(SO₃H)ₓ (II), as defined above or below.

The invention further provides a process for producing a cable comprising a step of forming at least one cable layer using the polymer composition as defined above or below.

The preferred process is a process for producing a cable of the invention as defined above, whereby the process comprises the step of
- applying on a conductor, preferably by (co)extrusion, one or more layers, wherein at least one layer comprises, preferably consists of, a polymer composition of the invention which comprises
- a polyolefin (a) bearing hydrolysable silane group(s) containing units and having an MFR₂ of less than 0.80 g/10 min, and
- a scorch retarding compound; as defined above or below.

The term "(co)extrusion" means herein that in case of two or more layers, said layers can be extruded in separate steps, or at least two or all of said layers can be coextruded in a same extrusion step, as well known in the art. The term "(co)extrusion" means herein also that all or part of the layer(s) are formed simultaneously using one or more extrusion heads. For instance a triple extrusion can be used for forming three layers. (Co)extrusion can be effected in any conventional cable extruder, e.g. a single or twin screw extruder.

The more preferable cable process of the invention produces:
(i) a cable (A), wherein the process comprises the steps of
   - applying on a conductor, preferably by (co)extrusion, at least an insulation layer comprising, preferably consisting of, a polymer composition of the invention which comprises
      - a polyolefin (a) bearing hydrolysable silane group(s) containing units and having an MFR₂ of less than 0.80 g/10 min, and
      - a scorch retarding compound; as defined above or below, or
(ii) a cable (B), wherein the process comprises the steps of
   - applying on a conductor, preferably by (co)extrusion, an inner semiconductive layer comprising a first semiconductive composition, an insulation layer comprising an insulation composition and an outer semiconductive layer comprising a second semiconductive composition, in that order,
      wherein the composition of at least one layer, preferably at least the insulation composition of the insulation layer comprises, preferably consists of, a polymer composition of the invention which comprises
      - a polyolefin (a) bearing hydrolysable silane group(s) containing units and having an MFR₂ of less than 0.80 g/10 min, and
      - a scorch retarding compound; as defined above or below.

A more preferable cable production process of the invention provides a process for producing (i) a cable (A) as defined above, wherein the process comprises the steps of
(a1) providing and mixing, preferably meltmixing in an extruder, at least an insulation composition comprising, preferably consisting of, a polymer composition of the invention which comprises
- a polyolefin (a) bearing hydrolysable silane group(s) containing units and having an MFR₂ of less than 0.80 g/10 min, and
- a scorch retarding compound; as defined above or below,
(b1) applying at least a meltmix of the insulation composition obtained from step (a1), preferably by (co)extrusion, on a conductor to form at least an insulation layer; and
(c1) optionally, and preferably, crosslinking the obtained at least the insulation layer, in the presence of a silanol condensation catalyst and water; or
(ii) a cable (B) as defined above comprising a conductor surrounded by an inner semiconductive layer, an insulation layer, and an outer semiconductive layer, in that order, wherein the process comprises the steps of
(a1)
- providing and mixing, preferably meltmixing in an extruder, a first semiconductive composition comprising a polymer, a conductive filler, preferably carbon black, and optionally further component(s) for the inner semiconductive layer,
- providing and mixing, preferably meltmixing in an extruder, an insulation composition for the insulation layer,
- providing and mixing, preferably meltmixing in an extruder, a second semiconductive composition comprising a polymer, a conductive filler, preferably a carbon black, and optionally further component(s) for the outer semiconductive layer;
(b1)
- applying on a conductor, preferably by coextrusion,
- a meltmix of the first semiconductive composition obtained from step (a1) to form the inner semiconductive layer,
- a meltmix of polymer composition obtained from step (a1) to form the insulation layer, and
- a meltmix of the second semiconductive composition obtained from step (a1) to form the outer semiconductive layer,
   wherein at least one of the layers, preferably at least the insulation composition of the insulation layer, comprises, preferably consists of, a polymer composition of the invention which comprises
   - a polyolefin (a) bearing hydrolysable silane group(s) containing units and having an MFR₂ of less than 0.80 g/10 min, and
   - a scorch retarding compound; as defined above or below, or in claims, including the preferred embodiments thereof; and
(c1) optionally, and preferably, crosslinking the obtained at least one of the inner semiconductive layer, insulation layer or outer semiconductive layer, preferably crosslinking at least the insulation layer, comprising the polymer composition of the invention, in the presence of a silanol catalyst and water.

As well known a meltmix of the polymer composition or component(s) thereof, is applied to form a layer. Meltmixing means mixing above the melting point of at least the major polymer component(s) of the obtained mixture and is carried out for example, without limiting to, in a temperature of at least 10-15°C above the melting or softening point of polymer component(s). The mixing step (a1) can be carried out in the cable extruder. The meltmixing step may comprise a separate mixing step in a separate mixer, e.g. kneader, arranged in connection and preceding the cable extruder of the cable production line. Mixing in the preceding separate mixer can be carried out by mixing with or without external heating (heating with an external source) of the component(s).

The polymer composition of the invention can be produced before or during the cable production process. Moreover the polymer composition(s) of the layer(s) can each independently comprise part or all of the components of the final composition, before providing to the (melt)mixing step (a1) of the cable production process. Then the remaining component(s), if any, are provided prior to or during the cable formation.

Accordingly, SR compound can be mixed with the polyolefin (a), e.g. by meltmixing, and the obtained meltmix is pelletized to pellets for use in cable production. Pellets mean herein generally any polymer product which is formed from reactor-made polymer (obtained directly from the reactor) by post-reactor modification to a solid polymer particles. Pellets can be of any size and shape. The obtained pellets are then used for cable production.

Alternatively, the polyolefin (a) and the SR compound of the invention can be provided separately to the cable production line. E.g. the SR compound of the invention can be provided in a well known master batch, to the mixing step (a1) of the cable production process, and combined with the polyolefin (a) component during the production process.

More preferably, the SR compound is incorporated to the pellets of the polyolefin (a). In this embodiment it is more preferred that the polymer composition of the invention is provided to the mixing step (a1) of the cable production process in a suitable product form, such as a pellet product.

All or part of the optional other component(s), such as further polymer component(s) or additive(s) can be present in the polymer composition before providing to the mixing step (a1) of the cable preparation process or can be added, e.g by the cable producer, during the mixing step (a1) of the cable production process.

If, and preferably, the polymer composition is crosslinkable and is crosslinked after the cable formation, then the silanol condensation catalyst, which is preferably as defined above, can be mixed with the components of the polymer composition before or during mixing step (a1) or the silanol condensation catalyst is brought to contact with the polymer composition after formation of the cable layer comprising, consisting of, the polymer composition of the invention. More preferably, in the preferred embodiment, wherein at least the insulation layer comprises, preferably consists of, the polymer composition of the invention, then the silanol condensation catalyst is incorporated to the pellets of the polymer composition e.g. via a catalyst master batch. The obtained pellets are then provided to the cable production step.

As already mentioned, the embodiment of cable (B) is preferred and at least the insulation layer comprises, preferably consists of, the polymer composition of the invention. Moreover, in this embodiment the polyolefin (a) and the SR compound of the polymer composition are combined together before the polymer composition is introduced, preferably in pellet form, to the cable production line.

In the preferred cable production process the obtained power cable (A) or cable (B) is crosslinked in step (c1). The crosslinking is carried out in the presence of a silanol condensation catalyst, which is preferably a sulphonic acid compound as defined above, and water, also called as moisture curing. Water can be in form of a liquid or vapour, or a combination thereof. Usually, the moisture curing is performed in ambient conditions or in a so called sauna or water bath at temperatures of 70 to 100 °C.

In this preferred embodiment of the cable production process a crosslinked power cable (B) is produced, wherein at least the insulation layer comprises, preferably consists of, the polymer composition of the invention which is crosslinked in the crosslinking step (c1) and optionally one or both of the inner semiconductive layer and outer semiconductive layer, preferably at least the inner semiconductive layer of the cable (B), is crosslinked in the crosslinking step (c1).

A crosslinked cable obtainable by the process is also provided.

The invention also provides a use of a polyolefin (a) bearing hydrolysable silane group(s) containing units and having a MFR₂ of less than 0.80 g/10 min as defined above or in claims for increasing the crosslinking speed of a silane crosslinkable polymer composition.

### Determination methods

Unless otherwise stated in the description or in the experimental part, the following methods were used for the property determination.

**Wt%:** % by weight

**Total amount** means weight, if in %, then 100wt%. E.g. the total amount (100 wt%) of the polymer composition.

### Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg (MFR₂) or 21.6 kg (MFR₂₁).

### Density

Low density polyethylene (LDPE): The density was measured according to ISO 1183-2. The sample preparation was executed according to ISO 1872-2 Table 3 Q (compression moulding).

Low pressure process polyethylene: Density of the polymer was measured according to ISO 1183/1872-2B.

### Scorch Tape Test

The test compositions were extruded in a 19 mm Brabender tape extruder with a length/ diameter ratio of 20 with a tape forming die having a melt temperature of 210 °C. A 4 :1 compression ratio screw was used, and the heat was adjusted to 160, 180 and 210°C for the different zones of the extruder. Water cooling was used on the feeding zone. The rotation speed was 30 rpm. Extrusion took place for 30 min.

Thereafter the 0,5 mm thick tapes produced were visually inspected and the surface quality was rated according to the amount of gels counted, haziness and irregularities of the tape. In the rating, the numbers mean: 1 is good (the tape has no gels, perfect finish, no irregular shaped edges, thin and transparent look), 3 is acceptable to be used for commercial production (there are a number of small gels, the tape is somewhat hazy but still the edges of the tape is perfect), and above 3 is not acceptable for commercial use (there are significant amount of small gels and or some larger ones > 1 mm).

### Tape sample for Hot set elongation: Production of 1.7 mm thick tapes for determination of crosslinking (Hot set elongation) performance of a test polymer composition

The tape sample was prepared from a test polymer composition comprising a crosslinking catalyst. The same conditions as for the scorch tape test described above with the exception that the temperature settings of the three zones are adjusted to 160, 180 and 180°C. The die was change to thicker one with an opening of 1.7 mm.

### Cable sample for Hot set elongation and elongation at break: Production of cable samples for determination of crosslinking (Hot set elongation) performance and Elongation at break performance of a test polymer composition

The insulation layer of the cable sample was prepared from a test polymer composition comprising a crosslinking catalyst. Cables consisting of a 7 mm² solid aluminium conductor and an insulation thickness of 0,7 mm were produced in Nokia-Maillefer 60 mm extruder at a line speed of 75 meter/minute by applying the following conditions;
Conductor temperature: 110°C
Cooling bath temperature: 23°C
Extruder screw: Elise
Wire Guide: 3,1 mm
Die: 4,4mm
Temperature profile: 150, 160, 170, 170, 170, 170, 170, 170°C.

### Hot set elongation test

Test samples were prepared as described in "Determination methods" under "*Tape sample for Hot set*" or "*Cable sample for Hot set*"*,* as given in the context, and were used to determine the hot set properties. Three dumb-bells sample, taken out along extrusion direction were prepared according to ISO527 5A from the 1.7+-0,1 mm thick crosslinked tape or thick crosslinked insulation layer, as indicated in tables below. The hot set test were made according to EN60811-2-1 (hot set test) by measuring the thermal deformation. Reference lines, were marked 20 mm apart on the dumb-bells. Each test sample was fixed vertically from upper end thereof in the oven and the load of 0.2 MPa are attached to the lower end of each test sample. After 15 min, 200°C in oven the distance between the pre-marked lines were measured and the percentage hot set elongation calculated, elongation %. For permanent set % , the tensile force (weight) was removed from the test samples and after recovered in 200°C for 5 minutes and then let to cool in room temperature to ambient temperature. The permanent set % was calculated from the distance between the marked lines The average of the three test were reported.

### Content (wt% and mol%) of polar comonomer:

Comonomer content (wt%) of the polar comonomer was determined in a known manner based on Fourier transform infrared spectroscopy (FTIR) determination calibrated with ¹³C-NMR as described in Haslam J, Willis HA, Squirrel DC. Identification and analysis of plastics, 2nd ed. London Iliffe books; 1972. FTIR instrument was a Perkin Elmer 2000, 1scann, resolution 4cm⁻¹ .

For determination of the comonomers, films with thickness 0.1 mm were prepared. The peak for the used comonomer was compared to the peak of polyethylene as evident for a skilled person (e.g. the peak for butyl acrylate at 3450 cm⁻¹ was compared to the peak of polyethylene at 2020 cm⁻¹). The weight-% was converted to mol-% by calculation based on the total moles of polymerisable monomers.

### Butyl Acrylate Content

Co monomer content (wt %) was determined in a known manner based on Fourier transform infrared spectroscopy (FTIR) determination calibrated with ¹³C-NMR. The peak for the co monomer was compared to the peak of polyethylene (e.g. the peak for butyl acrylate at 3450 cm⁻¹ was compared to the peak of polyethylene at 2020 cm⁻¹ and the peak for silane at 945 cm⁻¹ was compared to the peak of polyethylene at 2665 cm⁻¹. The calibration with ¹³C-NMR is effected in a conventional manner which is well documented in the literature.

### The content of hydrolysable silane group(s)

The amount of hydrolysable silane group(s) (Si(Y)_{3-q}) was determined using X-ray fluorescence analysis:
The pellet sample was pressed to a 3 mm thick plaque (150°C for 2 minutes, under pressure of 5 bar and cooled to room temperature). Si-atom content was analysed by wavelength dispersive XRF (AXS S4 Pioneer Sequential X-ray Spectrometer supplied by Bruker). The pellet sample was pressed to a 3 mm thick plaque (150°C for 2 minutes, under pressure of 5 bar and cooled to room temperature).

Generally, in XRF- method, the sample is irradiated by electromagnetic waves with wavelengths 0.01-10 nm. The elements present in the sample will then emit fluorescent X-ray radiation with discrete energies that are characteristic for each element. By measuring the intensities of the emitted energies, quantitative analysis can be performed. The quantitative methods are calibrated with compounds with known concentrations of the element of interest e.g. prepared in a Brabender compounder.

The XRF results show the total content (wt%) of Si and are then calculated and expressed herein as Mol content of hydrolysable silane group(s) (Si(Y)_{3-q})/kg polymer (in the inventive composition polyolefin (a)) according to the following formula;
Wₛᵢₗₐₙₑ/Mₛᵢₗₐₙₑ/ (Wₛᵢₗₐₙₑ/Mₛᵢₗₐₙₑ+ W_{etylene}/M_{ethylene}+ W_{Co-monemer-1}/M_{co-monomer-1}+..W_{co-monemer-n}/M_{co}-ₘₒₙₒₘₑᵣ₋ₙ)

In which;
Wₛᵢₗₐₙₑ=The weight in gram of the hydrolysable silane group(s) (Si(Y)_{3-q}/kg polymer (a)
Mₛᵢₗₐₙₑ=The molecular weight the hydrolysable silane group(s) (Si(Y)_{3-q}
W_{ethylene}=The weight in gram of ethylene/kg polymer (a)
M_{ethylene}=The molecular weight of ethylene
W_{co-monomer-1}=The weight in gram of comonomer-1/kg polymer (a) if present
M_{co-monomer-1}=The molecular weight of co-monomer-1 if present
W_{co-monomer-n}
=The weight in gram of co-monomer-n/kg polymer (a) if present
M_{co-monomer-n}=The molecular weight of commoner-1 if present

### Mol SR/kg Polymer Composition

The amount of SR added to the polymer composition was weighed and the molar amount calculated in accordance with the following formula;
W_{SR}/M_{SR}
W_{SR}=The weight in gram of SR added to one kg of the complete polymer composition
M_{SR}=The molecular weight of the SR

### Determination of Elongation at Break without a Thermo Oxidative Ageing and After Optional Thermo Oxidative Ageing of Cable Samples Elongation at Break of Cable Samples without a Thermo Oxidative Ageing:

The Elongation at break of the 150 mm stripped cable samples prepared as described in the "Determination methods" under "Cable sample for Hot set elongation and elongation at break" were measured in accordance with ISO 527-1:1993 at 23°C and 50% relative humidity on a Doli-Alwetron TCT 25 tensile tester at a speed of 250mm/min. A digital extensiometer with a starting distance of 50mm was used for determination of the elongation at break. The starting distance between the clamps of the tensile tester was 115 mm. A 1 kilo Newton load cell was used for the measurements. The samples were conditioned for minimum 16 hours at 23+/-2°C and 50% relative humidity prior testing. The median value out of 10 samples is reported herein.

### Optional: Elongation at Break after a Thermo Oxidative Ageing of Cable Samples

The non-stripped cable samples were aged in a Elastocon cellular oven at 135°C at air flow of 200cm³/hour in accordance with IEC 60811-1-2. Prior ageing the 10 samples were conditioned at 70+/2°C for 24 hours.

### Experimental part

The components and their amounts of the inventive and reference compositions, the crosslinking conditions and period, as well as the results of the measurements are given in tables below.

### Preparation of examples

### Inventive Example 1 and Comparative Example 1

Ethylene vinyl trimethoxy silane copolymers (Polymer A and B) were produced at 230°C and 190 MPa in a stirred (1200 rpm) high pressure autoclave reactor (0,16m³). The reactor jacket was heated externally to a temperature of 150°C. Chain Transfer Agent (CTA), initiators and comonomers were added in a conventional manner to the ethylene in the reactor system. Propion aldehyde was used as CTA and as the initiators t-butyl peroxypivalate (Luperox 11 M75), t-butyl peroxyacetate (Luperox 7M50) and t-butylperoxy 2-ethylhexanoate (Luperox 26) were used. MFR_{2,16} were adjusted by addition of propion aldehyde as chain transfer agent in a manner known to a skilled person.

The amount of the vinyl trimethoxy silane units, VTMS, (=silane group(s) containing units), density and MFR₂ are given in the table 1.

The copolymers were extruded to 1.7 mm thick tapes as described above under "Determination methods" (Tape sample for Hot set elongation). Prior extrusion an 5 wt% of a Low density polyethylene (MFR₂=2, Density 923 kg/m³) based catalyst master batch (CMBSA) containing 1.7 wt% dodecyl benzene sulphonic acid as crosslinking catalyst and 2 wt% Irganox 1010 as stabiliser was dry blended into the silane copolymers. The dry blend was impregnated with 1.5 wt % of hexadecyl trimethoxy silane (Scorch retarding compound) two hours prior extrusion. The tapes were crosslinked in a water bath at 90°C for 2, 4 and 7 hours followed by hot set elongation (Hot set) determination as described under "Determination methods".

**Table 1.**

| | Example 1 | Comparative example 1 |
|---|---|---|
| Name of polymer | Polymer A | Polymer B |
| MFR_{2,16}, g/10 min | 0.36 | 2.0 |
| Density, kg/m³ | 923 | 923 |
| VTMS, mol/kg polymer | 0.068 | 0.088 |
| Scorch retarding compound, | 0.043 | 0.043 |
| mol/kg polymer composition | | |
| Catalyst master batch | 5% CMBSA | 5% CMBSA |
| Hot set, % | | |
| 2h | 39 | 66 |
| 4h | 29 | 64 |
| 7h | 34 | 61 |
| 24h | 24 | 47 |
| Scorch tape rating | 1 | 1 |

In spite of a lower VTMS content Polymer A shows much quicker crosslinking speed than Polymer B reaching a Hot set below 60% far below 2 hours crosslinking compared with somewhat more than 7 hours for Polymer B.

### Inventive Example 2 and Comparative Examples 2D and 2E

Polymers C-E were produced in a 660 m long split feed high pressure tubular reactor (Union Carbide type A-1). The inner wall diameter is 32 mm. Chain Transfer Agent (propylene), initiators (t-butylperoxy 2-ethylhexanoate (Luperox 26) and air) and co-monomers were added to the reactor system in a conventional manner. The ethylene vinyl trimethoxy silane terpolymer (Polymer C, butyl acrylate (BA) as the polar comonomer) was produced at 230 MPa and a maximum temperature of 310°C. The ethylene vinyl trimethoxy silane terpolymer (Polymer E, BA as the polar copolymer) and the copolymer D were produced at a pressure of 235 MPa and a maximum temperature of 260°C. In order to regulate MFR propylene was used as chain transfer agent.

The amount of the vinyl trimethoxy silane units, VTMS, (=silane group(s) containing units), the amount of BA, density and MFR₂ are given in the table 2.

0.7 mm insulated cable samples of the produced polymers were prepared as described in the "Determination methods" under "Cable sample for Hot set elongation and elongation at break". Prior extrusion 5 wt% of the catalyst master batch CMBSA described above had been dry blended into the polymers. The dry blend was impregnated with 1.5 wt% of hexadecyl trimethoxy silane (Scorch retarding compound) two hours prior extrusion. Following crosslinking at ambient conditions (23°C, 50 % relative humidity) hot-set measurements were performed.

**Table 2**

| | Inv.Example 2 | Comparative example 2D | Comparative example 2E |
|---|---|---|---|
| Name of polymer | Polymer C | Polymer D | Polymer E |
| MFR_{2,16}, g/10 min | 0.5 | 1.0 | 1.0 |
| Density, kg/m³ | 926 | 923 | 925 |
| VTMS, mol/kg | 0.10 | 0.091 | 0.091 |
| polymer | | | |
| BA, weight-% | 8 | 0 | 4 |
| Scorch retarding | 0.043 | 0.043 | 0.043 |
| compound, mol/kg | | | |
| polymer composition | | | |
| Catalyst master batch | 5wt% CMBSA | 5wt% CMBSA | 5wt% CMBSA |
| Hot-Set, % | | | |
| 3h | 18 | Break | Break |
| 5h | 21 | Break | Break |
| 8h | - | Break | 75 |
| 16h | 25 | 111 | 65 |
| 24h | 21 | 80 | 40 |
| 48 | 14 | 54 | 31 |
| Scorch tape rating | 1 | 1 | 1 |

The combination of low MFR and incorporation of a polarity like BA show an extraordinary crosslinking speed and the cable are already fully crosslinked after 3 hour at ambient conditions.

### Inventive Example 3 and Comparative Examples 3F, 3G1 and 3G2

The ethylene vinyl trimethoxy silane copolymers (Polymer F and G) were produced in the same tubular reactor as described in inv.example 2 and analogously to polymers C-E using a maximum temperature of 310°C and 230 MPa. In order to regulate MFR_{2,16} propylene was used as chain transfer agent.

The amount of the vinyl trimethoxy silane units, VTMS, (=silane group(s) containing units), density and MFR₂ are given in the table 3.

The copolymers were extruded to 1.7 mm thick tapes as described above under "Determination methods" (Tape sample for Hot set elongation). Prior extrusion an 5 wt% of a Low density polyethylene (MFR₂=2, Density 923 kg/m³) based catalyst master batch (CMBDBTL) containing 2 wt% of dibutyl tin dilaurate as crosslinking catalyst and 2 wt% Irganox 1010 as stabiliser was dry blended into the silane copolymers. The dry blend was impregnated with 1.5 wt% of hexadecyl trimethoxy silane (Scorch retarding compound) two hours prior extrusion for the samples which is containing scorch retardant additive (see table below). The tapes were crosslinked in a water bath at 90°C for 2, 4, 6 and 16 hours, followed by hot set determination.

**Table 3**

| | Inv.Example 3 | Comparative example 3F | Comparative example 3G1 | Comparative example 3G2 |
|---|---|---|---|---|
| Name of | Polymer F | Polymer F | Polymer G | Polymer G |
| polymer | | | | |
| MFR_{2,16}, g/10 min | 0.4 | 0.4 | 1 | 1 |
| Density, kg/m³ | 923 | 923 | 923 | 923 |
| VTMS, mol/kg polymer | 0.081 | 0.081 | 0.13 | 0.13 |
| Scorch retarding compound, mol/kg polymer compostion | 0.043 | 0 | 0.043 | 0 |
| Catalyst master batch | 5wt% CMBDBTL | 5wt% CMDBTL | 5wt% CMDBTL | 5wt% CMDBTL |
| Hot-Set, % | | | | |
| 2h | 50 | 40 | 80 | 60 |
| 4h | 40 | 30 | 65 | 50 |
| 8h | 30 | 30 | 40 | 30 |
| 16h | 30 | 30 | 30 | 30 |
| Scorch tape rating | 1 | 4 | 1 | 2 |

In spite of a lower VTMS content the sample of inv.example 3 with low MFR crosslinks quicker than the samples of comp. examples with higher MFR. Moreover, although the inv. ex. 3 contains SR, the crosslinking speed is comparable to that of comp.ex. 3F with no SR. Additionally, the comp. Examples 3F and 3G2 which do not contain any scorch retarder show a bad surface appearance in the scorch tape rating test.

## Claims

1. A polymer composition which comprises
- a crosslinkable polyolefin (a) bearing hydrolysable silane group(s) containing units and having an MFR₂ of less than 0.80 g/10 min (according to ISO 1133 at 190 °C and at a load of 2.16 kg), and
- a scorch retarding compound.

2. The polymer composition according to claim 1, wherein the MFR₂ of the crosslinkable polyolefin (a) bearing hydrolysable silane group(s) containing units is from 0.15 to 0.75 g/10 min.

3. The polymer composition according to any of the preceding claims, wherein the polymer composition has a hot set elongation of 180%, more preferably of less than 150% and most preferably of less than 130%, when measured according to "Hot set elongation test" using a crosslinked cable sample as described under "Determination methods" after crosslinking the sample in water at 90°C for 20 hours.

4. The polymer composition according to any of the preceding claims, wherein the amount of the hydrolysable silane group(s) containing units is from 0.010 to 0.15 mol/kg polyolefin (a), preferably from 0.020 to 0.135 mol/kg polyolefin (a), more preferably from 0.025 to 0.11 mol/kg polyolefin (a), as determined in the description part under "Determination methods".

5. The polymer composition according to any of the preceding claims, wherein the hydrolysable silane group(s) containing units are introduced to polyolefin (a) by copolymerising an olefin comonomer with a hydrolysable silane group containing comonomer or by grafting a hydrolysable silane group containing compound to a polyolefin polymer, preferably by copolymerising an olefin comonomer with a hydrolysable silane group containing comonomer.

6. The polymer composition according to any of the preceding claims, wherein the polyolefin (a) bearing hydrolysable silane group(s) containing units is a propylene polymer or an ethylene copolymer, preferably an ethylene copolymer, more preferably a copolymer of ethylene with a hydrolysable silane group(s) containing comonomer which is produced in a the presence of an olefin polymerisation catalyst or a copolymer of ethylene with a hydrolysable silane group(s) containing comonomer which is produced in a high pressure process.

7. The polymer composition according to any of the preceding claims, wherein the polyolefin (a) bearing hydrolysable silane group(s) containing units is a low density homopolymer of ethylene (referred herein as LDPE homopolymer) bearing hydrolysable silane group(s) containing units or a low density copolymer of ethylene (LDPE copolymer) with at least one comonomer and bearing hydrolysable silane group(s) containing units, preferably LDPE copolymer of ethylene with at least silane groups containing comonomer and optionally with one or more other comonomer(s), which is preferably selected from polar comonomer(s) containing carboxyl and/or ester group(s), more preferably selected from the groups of acrylate(s), methacrylate(s) or acetate(s).

8. The polymer composition according to any of the preceding claims, wherein the hydrolysable silane group(s) containing comonomer or compound is an unsaturated silane compound represented by the formula
R¹SiR²_{q}Y_{3-q} (I)
wherein
R¹ is an ethylenically unsaturated hydrocarbyl, hydrocarbyloxy or (meth)acryloxy hydrocarbyl group,
each R² is independently an aliphatic saturated hydrocarbyl group,
Y which may be the same or different, is a hydrolysable organic group and
q is 0, 1 or 2.

9. Polyolefin composition according to any of the preceding claims, wherein the scorch retarding compound is a silicon containing compound has a structure according to the formula (III)
(R¹)ₓ[Si(R²)_{y}(R³)_{z}]ₘ (III)
wherein
R¹, which may be the same or different if more than one such group is present, is a monofunctional hydrocarbyl residue, or, if m = 2, is a bifunctional, hydrocarbyl residue, comprising from 1 to 100 carbon atoms;
R², which may be the same or different if more than one such group is present, is a hydrocarbyloxy residue comprising from 1 to 100 carbon atoms;
R³, is -R⁴SiR¹ₚR²_{q}**,** wherein
p is 0 to 3, preferably 0 to 2,
q is 0 to 3, preferably 1 to 3,
with the proviso that p + q is 3, and
R⁴ is -(CH₂)ᵣYₛ(CH₂)ₜ- where r and t independently are 1 to 3, s is 0 or 1 and Y is a difunctional heteroatomic group selected from -O-, -S-, -SO-, -SO₂-, -NH-, -NR¹- or -PR¹-, where R¹ and R² are as previously defined; and
x is 0 to 3, y is 1 to 4, z is 0 or 1, with the proviso that x + y + z = 4;
and m = 1 or 2.

10. The polymer composition according to any of the preceding claims, wherein the amount of the scorch retarding compound is at least 0.001 mol/kg polymer composition, preferably 0.001 to 0.2 mol/kg polymer composition, more preferably from 0.005 to 0.15 mol/kg polymer composition.

11. The polymer composition according to any of the preceding claims, wherein the polymer composition further comprises a silanol condensation catalyst, which is preferably selected from carboxylates of metals, such as tin, zinc, iron, lead and cobalt; from a titanium compound bearing a group hydrolysable to a Brönsted acid, from organic bases; from inorganic acids; and from organic acids; more preferably from carboxylates of metals, such as tin, zinc, iron, lead and cobalt, from titanium compound bearing a group hydrolysable to a Brönsted acid as defined above or from organic acids. The silanol condensation catalyst is more preferably selected from DBTL, DOTL, particularly DOTL; titanium compound bearing a group hydrolysable to a Brönsted acid as defined above); or an aromatic organic sulphonic acid, which is preferably an organic sulphonic acid which comprises the structural element:
Ar(SO₃H)ₓ (II)
wherein Ar is an aryl group which may be substituted or non- substituted, and if substituted, then preferably with at least one hydrocarbyl group up to 50 carbon atoms, and x is at least 1; or a precursor of the sulphonic acid of formula (II) including an acid anhydride thereof or a sulphonic acid of formula (II) that has been provided with a hydrolysable protective group(s), e.g. an acetyl group that is removable by hydrolysis.

12. The polymer composition according to any of the preceding claims, wherein the silanol condensation catalyst is present in an amount of 0,00001 to 0,1 mol/kg polymer composition preferably 0.0001 to 0.01 mol/kg polymer composition, more preferably 0.0005 to 0,005 mol/kg polymer composition.

13. An article comprising a polymer composition which comprises
- a crosslinkable polyolefin (a) bearing hydrolysable silane group(s) containing units and having an MFR₂ of less than 0.80 g/10 min (according to ISO 1133 at 190 °C and at a load of 2.16 kg), and
- a scorch retarding compound; as defined in any of the previous claims 1-12.

14. The article according to claim 13, which is a cable comprising a conductor surrounded by at least one layer comprising a polymer composition which comprises
- a crosslinkable polyolefin (a) bearing hydrolysable silane group(s) containing units and having an MFR₂ of less than 0.80 g/10 min (according to ISO 1133 at 190 °C and at a load of 2.16 kg), and
- a scorch retarding compound; as defined in any of the previous claims 1-12;
preferably a power cable selected from
- a cable (A) comprising a conductor surrounded by at least an insulating layer comprising a polymer composition which comprises
- a crosslinkable polyolefin (a) bearing hydrolysable silane group(s) containing units and having an MFR₂ of less than 0.80 g/10 min (according to ISO 1133 at 190 °C and at a load of 2.16 kg), and
- a scorch retarding compound; as defined in any of the previous claims 1-12; or
- a cable (B) comprising a conductor surrounded by an inner semiconductive layer, an insulating layer and an outer semiconductive layer, in that order, wherein at least one layer, preferably at least the insulation layer, comprises a polymer composition which comprises
- a crosslinkable polyolefin (a) bearing hydrolysable silane group(s) containing units and having an MFR₂ of less than 0.80 g/10 min (according to ISO 1133 at 190 °C and at a load of 2.16 kg), and
- a scorch retarding compound; as defined in any of the previous claims 1-12.

15. A process for producing a cable according to claim 14, whereby the process comprises the step of
- applying on a conductor, preferably by (co)extrusion, one or more layers, wherein at least one layer comprises a polymer composition which comprises
- a crosslinkable polyolefin (a) bearing hydrolysable silane group(s) containing units and having an MFR₂ of less than 0.80 g/10 min (according to ISO 1133 at 190 °C and at a load of 2.16 kg), and
- a scorch retarding compound; as defined in any of the previous claims 1-12;
preferably a process for producing :
(i) a cable (A), wherein the process comprises the steps of
- applying on a conductor, preferably by (co)extrusion, at least an insulation layer comprising a polymer composition which comprises
- a crosslinkable polyolefin (a) bearing hydrolysable silane group(s) containing units and having an MFR₂ of less than 0.80 g/10 min (according to ISO 1133 at 190 °C and at a load of 2.16 kg), and
- a scorch retarding compound; as defined in any of the previous claims 1-12; or
(ii) a cable (B), wherein the process comprises the steps of
- applying on a conductor, preferably by (co)extrusion, an inner semiconductive layer comprising a first semiconductive composition, an insulation layer comprising an insulation composition and an outer semiconductive layer comprising a second semiconductive composition, in that order, wherein the composition of at least one layer, preferably at least the insulation composition of the insulation layer comprises the polymer composition which comprises
- a crosslinkable polyolefin (a) bearing hydrolysable silane group(s) containing units and having an MFR₂ of less than 0.80 g/10 min (according to ISO 1133 at 190 °C and at a load of 2.16 kg), and
- a scorch retarding compound; as defined in any of the previous claims 1-12.

16. The process according to claim 15 for producing a crosslinked cable, wherein the process comprises a further step of
- crosslinking the obtained at least one layer comprising the polymer composition as defined in any of the previous claims 1-12 in the presence of a silanol condensation catalyst and water, preferably for producing:
(i) a crosslinked cable (A), wherein the process comprises a further step of:
- crosslinking the insulation composition of the obtained insulation layer of the cable (A) in the presence of a silanol condensation catalyst and water, or
(ii) a crosslinked cable (B), wherein the process comprises a further step of:
- crosslinking at least one of the insulation composition of the insulation layer, the first semiconductive composition of the inner semiconductive layer or the second semiconductive composition of the outer semiconductive layer of the obtained cable (B) in the presence of a silanol condensation catalyst and water; preferably crosslinking at least the insulation composition of the insulation layer of the cable (B), wherein said insulation composition comprises the polymer composition as defined in any of the previous claims 1-12.

17. A crosslinked cable obtainable by the process according to claim 16.

18. A use of a crosslinkable polyolefin (a) bearing hydrolysable silane group(s) containing units and having a MFR₂ of less than 0.80 g/10 min as defined in any of the claims 1, 2, 4-9 for increasing the crosslinking speed of a silane crosslinkable polymer composition.

## Patentansprüche

1. Polymerzusammensetzung, umfassend
- ein vernetzbares Polyolefin (a), das hydrolysierbare Silangruppe(n)-enthaltende Einheiten trägt und einen MFR2 von weniger als 0,80 g/10 min (gemäß ISO 1133 bei 190°C und einer Last von 2,16 kg) aufweist, und
- eine Scorch-hemmende Verbindung.

2. Polymerzusammensetzung nach Anspruch 1, wobei die MFR₂ des vernetzbaren Polyolefins (a), das hydrolysierbare Silangruppe(n)-enthaltende Einheiten trägt, von 0,15 bis 0,75 g/10 min ist.

3. Polymerzusammensetzung nach einem der vorhergehenden Ansprüche, wobei die Polymerzusammensetzung eine Wärmedehnung von 180%, besonders vorzugsweise von weniger als 150% und am meisten bevorzugt von weniger als 130% aufweist, wenn sie gemäß dem "Wärmedehnungstest" unter Verwendung einer vernetzbaren Kabelprobe, wie in den "Bestimmungsmethoden" beschrieben, gemessen wird, nachdem die Probe bei 90°C für 20 Stunden in Wasser vernetzt wurde.

4. Polymerzusammensetzung nach einem der vorhergehenden Ansprüche, wobei die Menge an hydrolysierbare Silangruppe(n)-enthaltenden Einheiten von 0,010 bis 0,15 mol/kg Polyolefin (a), vorzugsweise von 0,020 bis 0,135 mol/kg Polyolefin (a), besonders vorzugsweise von 0,025 bis 0,11 mol/kg Polyolefin (a) ist, wie sie in dem Beschreibungsteil unter "Bestimmungsverfahren" bestimmt wird.

5. Polymerzusammensetzung nach einem der vorhergehenden Ansprüche, wobei die hydrolysierbare Silangruppe(n)-enthaltenden Einheiten in das Polyolefin (a) durch Copolymerisation von einem Olefin-Copolymer mit einem hydrolysierbare Silangruppe-enthaltenden Comonomer oder durch Pfropfen einer hydrolysierbare Silangruppe-enthaltenden Verbindung auf ein Polyolefinpolymer eingeführt werden, vorzugsweise durch die Copolymerisation von einem Olefin-Copolymer mit einem hydrolysierbare Silangruppe-enthaltenden Comonomer.

6. Polymerzusammensetzung nach einem der vorhergehenden Ansprüche, wobei das Polyolefin (a), das hydrolysierbare Silangruppe(n)-enthaltende Einheiten trägt, ein Propylenpolymer oder ein Ethylencopolymer, vorzugsweise ein Ethylencopolymer, besonders vorzugsweise ein Copolymer aus Ethylen mit einem hydrolysierbare Silangruppe(n)-enthaltenden Copolymer, welches in Anwesenheit von einem Olefin-Polymerisationskatalysator hergestellt wird, oder ein Copolymer aus Ethylen mit einem hydrolysierbare Silangruppe(n)-enthaltenden Copolymer ist, welches in einem Hochdruckverfahren hergestellt wird.

7. Polymerzusammensetzung nach einem der vorhergehenden Ansprüche, wobei das Polyolefin (a), das hydrolysierbare Silangruppe(n)-enthaltende Einheiten trägt, ein Homopolymer niederer Dichte aus Ethylen (nachstehend als LDPE Homopolymer bezeichnet), das hydrolysierbare Silangruppe(n)-enthaltende Einheiten trägt, oder ein Copolymer niederer Dichte aus Ethylen (LDPE Copolymer) mit wenigstens einem Comonomer ist und hydrolysierbare Silangruppe(n)-enthaltende Einheiten trägt, vorzugsweise ein LDPE-Copolymer aus Ethylen mit wenigstens Silangruppen-enthaltendem Comonomer und optional ein oder mehreren anderen Comonomeren ist, die vorzugsweise aus polarem(n) Comonomer(en), das eine Carboxyl- und/oder Estergruppe(n) enthält, ausgewählt sind und besonders vorzugsweise aus den Gruppen Acrylat(e), Methacrylat(e) oder Acetat(e) ausgewählt sind.

8. Polymerzusammensetzung nach einem der vorhergehenden Ansprüche, wobei das hydrolysierbare Silangruppe(n)-enthaltende Comonomer oder die hydrolysierbare Silangruppe(n)-enthaltende Verbindung eine ungesättigte Silanverbindung ist, repräsentiert durch die Formel
R¹SiR²_{q}Y_{3-q} (I)
wobei
R¹ eine ethylenisch ungesättigte Hydrocarbyl-, Hydrocarbyloxy- oder (Meth)acryloxyhydrocarbyl-Gruppe ist,
jeder R² unabhängig eine aliphatische gesättigte Hydrocarbylgruppe ist,
Y, welches gleich oder verschieden sein kann, eine hydrolysierbare organische Gruppe ist und
q 0, 1 Oder 2 ist.

9. Polyolefinzusammensetzung nach einem der vorhergehenden Ansprüche, wobei die Scorch-hemmende Verbindung eine Siliziumhaltige Verbindung ist und eine Struktur gemäß der Formel (III)
(R¹)ₓ[Si(R²)_{y}(R³)_{z}]m (III)
aufweist, wobei
R¹, welcher, wenn mehr als eine solche Gruppen vorhanden ist, gleich oder verschieden sein kann und ein monofunktionaler Hydrocarbyl-Rest ist, oder, wenn m = 2 ist, ein bifunktionaler Hydrocarbyl-Rest ist, der 1 bis 100 Kohlenstoffatome umfasst;
R², welcher, wenn mehr als eine solche Gruppen vorhanden ist, gleich oder verschieden sein kann und ein Hydrocarbyloxy-Rest ist, der 1 bis 100 Kohlenstoffatome umfasst;
R³ -R⁴SiR¹_{q}R²_{q} ist, wobei
p 0 bis 3, vorzugsweise 0 bis 2, ist,
q 0 bis 3, vorzugsweise 1 bis 3, ist,
unter der Voraussetzung, dass p + q 3 ist, und
R⁴ -(CH₂)ᵣYₛ(CH₂)ₜ- ist, wobei r und t unabhängig 1 bis 3 sind, s 0 oder 1 ist und Y eine difunktionale Heteroatomgruppe, die aus -O-, -S-, -SO-, -SO₂-, -NH-, -NR¹- oder -PR¹- ausgewählt ist, wobei R¹ und R² wie zuvor definiert sind; und
X 0 bis 3 ist, y 1 bis 4 ist, z 0 oder 1 ist, unter der Voraussetzung, dass x + y + z = 4;
und m = 1 oder 2.

10. Polymerzusammensetzung nach einem der vorhergehenden Ansprüche, wobei die Menge der Scorch-hemmenden Verbindung wenigstens 0,001 mol/kg Polymerzusammensetzung, vorzugsweise 0,001 bis 0,2 mol/kg Polymerzusammensetzung und besonders vorzugsweise 0,005 bis 0,15 mol/kg Polymerzusammensetzung ist.

11. Polymerzusammensetzung nach einem der vorhergehenden Ansprüche, wobei die Polymerzusammensetzung ferner einen Silanol-Kondensations-Katalysator umfasst, welcher vorzugsweise ausgewählt ist aus Carboxylaten von Metallen wie zum Beispiel Zinn, Zink, Eisen, Blei und Kobalt; aus einer Titanverbindung, die eine Gruppe trägt, die durch eine Brönsted-Säure hydrolisierbar ist; aus organischen Basen; aus anorganischen Säuren; aus organischen Säuren; besonders bevorzugt aus Carboxylaten von Metallen wie zum Beispiel Zinn, Zink, Eisen, Blei und Kobalt, aus einer Titanverbindung, die eine Gruppe trägt, die durch eine Brönsted-Säure wie oben definiert hydrolisierbar ist, oder aus organischen Säuren. Der Silanol-Kondensations-Katalysator ist besonders vorzugsweise ausgewählt aus DBTL, DOTL, insbesondere DOTL; einer Titanverbindung, die eine Gruppe trägt, die durch eine Brönsted-Säure wie oben definiert hydrolisierbar ist; oder einer aromatischen organischen Sulphonsäure, die vorzugsweise eine organische Sulphonsäure ist, welche das Strukturelement:
Ar(SO₃H)ₓ (II)
umfasst, wobei
Ar eine Arylgruppe ist, die substituiert oder nicht substituiert sein kann, und wenn sie substituiert ist, dann vorzugsweise mit wenigstens einer Hydrocarbylgruppe mit bis zu 50 Kohlenstoffatomen, und x wenigstens 1 ist; oder ein Vorläufer der Sulphonsäure mit der Formel (II) ist, einschließlich eines Säureanhydrids davon oder einer Sulphonsäure mit der Formel (II), die mit einer hydrolisierbaren Schutzgruppe(n) versehen ist, zum Beispiel einer Acetylgruppe, die durch Hydrolyse entfernbar ist.

12. Polymerzusammensetzung nach einem der vorhergehenden Ansprüche, wobei der Silanol-Kondensations-Katalysator in einer Menge von 0,00001 bis 0,1 mol/kg Polymerzusammensetzung, vorzugsweise von 0,0001 bis 0,01 mol/kg Polymerzusammensetzung und besonders vorzugsweise von 0,0005 bis 0,005 mol/kg Polymerzusammensetzung vorhanden ist.

13. Artikel, umfassend eine Polymerzusammensetzung, welche umfasst
- ein vernetzbares Polyolefin (a), das hydrolysierbare Silangruppe(n)-enthaltende Einheiten trägt und einen MFR2 von weniger als 0,80 g/10 min (gemäß ISO 1133 bei 190°C und einer Last von 2,16 kg) aufweist, und
- eine Scorch-hemmende Verbindung; wie in einem der vorgehenden Ansprüche 1-12 definiert.

14. Artikel nach Anspruch 13, der ein Kabel ist, das einen Leiter umfasst, welcher von wenigstens einer Schicht umgeben ist, die eine Polymerzusammensetzung umfasst, welche umfasst
- ein vernetzbares Polyolefin (a), das hydrolysierbare Silangruppe(n)-enthaltende Einheiten trägt und einen MFR2 von weniger als 0,80 g/10 min (gemäß ISO 1133 bei 190°C und einer Last von 2,16 kg) aufweist, und
- eine Scorch-hemmende Verbindung; wie in einem der vorgehenden Ansprüche 1-12 definiert,
und der vorzugsweise ein Stromkabel ist, ausgewählt aus
- einem Kabel (A), das einen Leiter umfasst, welcher von wenigstens einer Isolierschicht umgeben ist, die eine Polymerzusammensetzung umfasst, welche umfasst
- ein vernetzbares Polyolefin (a), das hydrolysierbare Silangruppe(n)-enthaltende Einheiten trägt und einen MFR2 von weniger als 0,80 g/10 min (gemäß ISO 1133 bei 190°C und einer Last von 2,16 kg) aufweist, und
- eine Scorch-hemmende Verbindung; wie in einem der vorgehenden Ansprüche 1-12 definiert; oder
- einem Kabel (B), das einen Leiter umfasst, welcher von einer inneren halbleitenden Schicht, einer Isolierschicht und einer äußeren halbleitenden Schicht in dieser Reihenfolge umgeben ist, wobei wenigstens eine Schicht, vorzugsweise wenigstens die Isolierschicht, eine Polymerzusammensetzung umfasst, welche umfasst
- ein vernetzbares Polyolefin (a), das hydrolysierbare Silangruppe(n)-enthaltende Einheiten trägt und einen MFR2 von weniger als 0,80 g/10 min (gemäß ISO 1133 bei 190°C und einer Last von 2,16 kg) aufweist, und
- eine Scorch-hemmende Verbindung; wie in einem der vorgehenden Ansprüche 1-12 definiert.

15. Verfahren zur Herstellung eines Kabels nach Anspruch 14, wobei das Verfahren den Schritt umfasst
- Aufbringen auf einen Leiter, vorzugsweise durch (Co)-Extrusion, von einen oder mehreren Schichten, wobei wenigstens eine Schicht eine Polymerzusammensetzung umfasst, welche umfasst
- ein vernetzbares Polyolefin (a), das hydrolysierbare Silangruppe(n)-enthaltende Einheiten trägt und einen MFR2 von weniger als 0,80 g/10 min (gemäß ISO 1133 bei 190°C und einer Last von 2,16 kg) aufweist, und
- eine Scorch-hemmende Verbindung; wie in einem der vorgehenden Ansprüche 1-12 definiert;
und vorzugsweise ein Verfahren zur Herstellung:
(i) eines Kabels (A), wobei das Verfahren die Schritte umfasst
- Aufbringen auf einen Leiter, vorzugsweise durch (Co)-Extrusion, von wenigstens einer Isolierschicht, die eine Polymerzusammensetzung umfasst, welche umfasst
- ein vernetzbares Polyolefin (a), das hydrolysierbare Silangruppe(n)-enthaltende Einheiten trägt und einen MFR2 von weniger als 0,80 g/10 min (gemäß ISO 1133 bei 190°C und einer Last von 2,16 kg) aufweist, und
- eine Scorch-hemmende Verbindung; wie in einem der vorgehenden Ansprüche 1-12 definiert; oder
(ii) eines Kabels (B), wobei das Verfahren die Schritte umfasst
- Aufbringen auf einen Leiter, vorzugsweise durch (Co)-Extrusion, von einer inneren halbleitenden Schicht, die eine erste halbleitende Zusammensetzung umfasst, einer Isolierschicht, die eine Isolierzusammensetzung umfasst, und einer äußeren halbleitenden Schicht, die eine zweite halbleitende Zusammensetzung umfasst, in dieser Reihenfolge, wobei die Zusammensetzung von wenigstens einer Schicht, vorzugsweise wenigstens der Isolierzusammensetzung der Isolierschicht, die Polymerzusammensetzung umfasst, welche umfasst
- ein vernetzbares Polyolefin (a), das hydrolysierbare Silangruppe(n)-enthaltende Einheiten trägt und einen MFR2 von weniger als 0,80 g/10 min (gemäß ISO 1133 bei 190°C und einer Last von 2,16 kg) aufweist, und
- eine Scorch-hemmende Verbindung; wie in einem der vorgehenden Ansprüche 1-12 definiert.

16. Verfahren nach Anspruch 15 zur Herstellung eines vernetzten Kabels, wobei das Verfahren einen weiteren Schritt umfasst
- Vernetzten der erhaltenen wenigstens einen Schicht, die die Polymerzusammensetzung nach einem der vorhergehenden Ansprüche 1-12 umfasst, in der Anwesenheit von einem Silanol-Kondensations-Katalysator und Wasser, vorzugsweise zur Herstellung:
(i) eines vernetzten Kabels (A), wobei das Verfahren einen weiteren Schritt umfasst:
- Vernetzten der Isolierzusammensetzung der erhaltenen Isolierschicht von dem Kabel (A) in der Anwesenheit von einem Silanol-Kondensations-Katalysator und Wasser, oder
(ii) eines vernetzten Kabels (B), wobei das Verfahren einen weiteren Schritt umfasst:
- Vernetzten von wenigstens einer Zusammensetzung, der Isolierzusammensetzung der Isolierschicht, der ersten halbleitenden Zusammensetzung der inneren halbleitenden Schicht oder der zweiten Zusammensetzung der äußeren halbleitenden Schicht, des erhaltenen Kabels (B) in der Anwesenheit von einem Silanol-Kondensations-Katalysator und Wasser; vorzugsweise Vernetzten von wenigsten der Isolierzusammensetzung der Isolierschicht des Kabels (B), wobei die besagte Isolierzusammensetzung die Polymerzusammensetzung nach einem der vorhergehenden Ansprüche 1-12 umfasst.

17. Vernetztes Kabel, das durch das Verfahren nach Anspruch 16 erhalten wird.

18. Verwendung eines vernetzbaren Polyolefins (a) nach einem der Ansprüche 1, 2, 4-9, das hydrolysierbare Silangruppe(n)-enthaltende Einheiten trägt und einen MFR2 von weniger als 0,80 g/10 min aufweist, zur Steigerung der Vernetzungsgeschwindigkeit von einer Silanvernetzbaren Polymerzusammensetzung.

## Revendications

1. Composition de polymère qui comprend
- une polyoléfine pouvant être réticulée (a) portant des unités contenant un ou des groupe(s) silane hydrolysable(s) et ayant un MFR₂ (indice de fluidité) inférieur à 0,80 g/10 minutes (selon ISO 1133 à 190 °C et à une charge de 2,16 kg), et
- un composé retardateur de vulcanisation prématurée.

2. Composition de polymère selon la revendication 1, dans lequel le MFR₂ de la polyoléfine pouvant être réticulée (a) portant des unités contenant un ou des groupe(s) silane hydrolysable(s) va de 0,15 à 0,75 g/10 minutes.

3. Composition de polymère selon l'une quelconque des revendications précédentes, dans laquelle la composition de polymère a un allongement à chaud de 180 %, plus de préférence de moins de 150 % et le plus de préférence de moins de 130 %, lorsque mesuré selon le « test d'allongement à chaud » en utilisant un échantillon de câble réticulé tel que décrit sous « Procédés de détermination » après réticulation de l'échantillon dans de l'eau à 90 °C pendant 20 heures.

4. Composition de polymère selon l'une quelconque des revendications précédentes, dans laquelle la quantité des unités contenant un ou des groupe(s) silane hydrolysable(s) est de 0,010 à 0,15 mole/kg de polyoléfine (a), de préférence de 0,020 à 0,135 mole/kg de polyoléfine (a), plus de préférence de 0,025 à 0,11 mole/kg de polyoléfine (a), comme on le détermine dans la partie description sous « Procédés de détermination ».

5. Composition de polymère selon l'une quelconque des revendications précédentes, dans laquelle les unités contenant un ou des groupe(s) silane hydrolysable(s) sont introduites dans la polyoléfine (a) en copolymérisant un comonomère d'oléfine avec un comonomère contenant un groupe silane hydrolysable ou en greffant un composé contenant un groupe silane hydrolysable à un polymère de polyoléfine, de préférence en copolymérisant un comonomère d'oléfine avec un comonomère contenant un groupe silane hydrolysable.

6. Composition de polymère selon l'une quelconque des revendications précédentes, dans laquelle la polyoléfine (a) portant des unités contenant un ou des groupe(s) silane hydrolysable(s) est un polymère de propylène ou un copolymère d'éthylène, de préférence un copolymère d'éthylène, plus de préférence un copolymère d'éthylène avec un comonomère contenant un ou des groupe(s) silane hydrolysable(s) qui est produit en présence d'un catalyseur de polymérisation d'oléfine ou un copolymère d'éthylène avec un comonomère contenant un ou des groupe(s) silane hydrolysable(s) qui est produit dans un processus à haute pression.

7. Composition de polymère selon l'une quelconque des revendications précédentes, dans laquelle la polyoléfine (a) portant des unités contenant un ou des groupe(s) silane hydrolysable(s) est un homopolymère d'éthylène de faible masse volumique (mentionné dans ce document en tant qu'homopolymère LDPE) portant des unités contenant un ou des groupe(s) silane hydrolysable(s) ou un copolymère d'éthylène de faible masse volumique (copolymère de LDPE) avec au moins un comonomère et portant des unités contenant un ou des groupe(s) silane hydrolysable(s), de préférence un copolymère d'éthylène LDPE avec au moins un comonomère contenant des groupes silane et de manière facultative avec un ou plusieurs autre(s) comonomère(s), qui est de préférence sélectionné à partir de comonomère(s) polaire(s) contenant un ou des groupe(s) carboxyle et/ou ester, plus de préférence sélectionné à partir des groupes acrylate(s), méthacrylate(s) ou acétate(s).

8. Composition de polymère selon l'une quelconque des revendications précédentes, dans laquelle le composé ou le comonomère contenant un ou des groupe(s) silane hydrolysable(s) est un composé de silane non saturé représenté par la formule
R¹SiR²_{q}Y_{3-q} (I)
dans laquelle
R¹ est un groupe hydrocarbyle non saturé en ce qui concerne l'éthylène, hydrocarbyloxy ou hydrocarbyle (méth)acryloxy,
chaque R² est indépendamment un groupe hydrocarbyle saturé aliphatique,
Y qui peut être le même ou différent, est un groupe organique hydrolysable, et
q vaut 0, 1 ou 2.

9. Composition de polyoléfine selon l'une quelconque des revendications précédentes, dans laquelle le composé retardateur de vulcanisation prématurée est un composé contenant du silicium a une structure selon la formule (III)
(R¹)ₓ[Si(R²)_{y}(R³)_{z}]m (III)
dans laquelle
R¹, qui peut être le même ou différent si plus d'un tel groupe est présent, est un résidu d'hydrocarbyle monofonctionnel, ou, si m = 2, est un résidu d'hydrocarbyle, bifonctionnel, comprenant de 1 à 100 atomes de carbone ;
R², qui peut être le même ou différent si plus qu'un tel groupe est présent, est un résidu d'hydrocarbyloxy comprenant de 1 à 100 atomes de carbone ;
R³ est -R⁴SiR¹ₚR²_{q}, dans lequel
p vaut 0 à 3, de préférence 0 à 2,
q vaut 0 à 3, de préférence 1 à 3,
avec la clause restrictive que p + q vaut 3, et
R⁴ est -(CH₂)ᵣYₛ(CH₂)ₜ- où r et t sont indépendamment 1 à 3, s est 0 ou 1 et Y est un groupe hétéroatomique difonctionnel sélectionné à partir de -O-, -S-, -SO-, -SO₂-, -NH-, -NR₁- ou -PR¹-, où R¹ et R² sont comme on l'a précédemment défini ; et
x vaut 0 à 3, y vaut 1 à 4, z vaut 0 ou 1, avec la clause restrictive que x + y + z = 4 ;
et m = 1 ou 2.

10. Composition de polymère selon l'une quelconque des revendications précédentes, dans laquelle la quantité du composé retardateur de vulcanisation prématurée est une composition de polymère d'au moins 0,001 mole/kg, de préférence une composition de polymère de 0,001 à 0,2 mole/kg, plus de préférence une composition de polymère de 0,005 à 0,15 mole/kg.

11. Composition de polymère selon l'une quelconque des revendications précédentes, dans laquelle la composition de polymère comprend en outre un catalyseur de condensation au silanol, qui est de préférence sélectionné à partir de carboxylates de métaux, comme l'étain, le zinc, le fer, le plomb et le cobalt ; à partir d'un composé de titane portant un groupe hydrolysable à un acide de Brönsted ; à partir de bases organiques ; à partir d'acides inorganiques ; et à partir d'acides organiques ; plus de préférence à partir de carboxylates de métaux, comme l'étain, le zinc, le fer, le plomb et le cobalt, à partir d'un composé de titane portant un groupe hydrolysable à un acide de Brönsted tel que précédemment défini ou à partir d'acides organiques. Le catalyseur de condensation au silanol est plus de préférence sélectionné à partir de DBTL, DOTL, particulièrement DOTL ; un composé de titane portant un groupe hydrolysable à un acide de Brönsted tel que précédemment défini ; ou un acide sulfonique organique aromatique, qui est de préférence un acide sulfonique organique qui comprend l'élément structurel :
Ar(SO₃H)ₓ (II)
dans lequel Ar est un groupe aryle qui peut être substitué ou non substitué, et s'il est substitué, alors de préférence par au moins un groupe hydrocarbyle jusqu'à 50 atomes de carbone, et x est au moins 1 ; ou un précurseur de l'acide sulfonique de formule (II) incluant un anhydride d'acide de ce dernier ou un acide sulfonique de formule (II) qui a été muni d'un ou de groupe(s) protecteur(s) hydrolysable(s), par exemple un groupe acétyle qui est amovible par hydrolyse.

12. Composition de polymère selon l'une quelconque des revendications précédentes, dans lequel le catalyseur de condensation au silanol est présent dans une composition de polymère en une quantité de 0,00001 à 0,1 mole/kg, de préférence une composition de polymère de 0,0001 à 0,01 mole/kg, plus de préférence une composition de polymère de 0,0005 à 0,005 mole/kg.

13. Article comprenant une composition de polymère qui comprend
- une polyoléfine pouvant être réticulée (a) portant des unités contenant un ou des groupe(s) silane hydrolysable(s) et ayant un MFR₂ inférieur à 0,80 g/10 minutes (selon ISO 1133 à 190 °C et à une charge de 2,16 kg), et
- un composé retardateur de vulcanisation prématurée ; tel que défini dans l'une quelconque des revendications précédentes 1 à 12.

14. Article selon la revendication 13, qui est un câble comprenant un conducteur entouré par au moins une couche comprenant une composition de polymère qui comprend
- une polyoléfine pouvant être réticulée (a) portant des unités contenant un ou des groupe(s) silane hydrolysable(s) et ayant un MFR₂ inférieur à 0,80 g/10 minutes (selon ISO 1133 à 190 °C et à une charge de 2,16 kg), et
- un composé retardateur de vulcanisation prématurée ; tel que défini dans l'une quelconque des revendications précédentes 1 à 12 ; de préférence un câble électrique sélectionné à partir de
- un câble (A) comprenant un conducteur entouré par au moins une couche isolante comprenant une composition de polymère qui comprend
- une polyoléfine pouvant être réticulée (a) portant des unités contenant un ou des groupe(s) silane hydrolysable(s) et ayant un MFR₂ inférieur à 0,80 g/10 minutes (selon ISO 1133 à 190 °C et à une charge de 2,16 kg), et
- un composé retardateur de vulcanisation prématurée ; tel que défini dans l'une quelconque des revendications précédentes 1 à 12 ; ou
- un câble (B) comprenant un conducteur entouré par une couche semiconductrice intérieure, une couche isolante et une couche semiconductrice extérieure, dans cet ordre, dans lesquelles au moins une couche, de préférence au moins la couche isolante, comprend une composition de polymère qui comprend
- une polyoléfine pouvant être réticulée (a) portant des unités contenant un ou des groupe(s) silane hydrolysable(s) et ayant un MFR₂ inférieur à 0,80 g/10 minutes (selon ISO 1133 à 190 °C et à une charge de 2,16 kg), et
- un composé retardateur de vulcanisation prématurée ; tel que défini dans l'une quelconque des revendications précédentes 1 à 12.

15. Processus pour produire un câble selon la revendication 14, de sorte que le processus comprend l'étape
- d'application sur un conducteur, de préférence par (co)extrusion, d'une ou plusieurs couches, dans lesquelles au moins une couche comprend une composition de polymère qui comprend
- une polyoléfine pouvant être réticulée (a) portant des unités contenant un ou des groupe(s) silane hydrolysable(s) et ayant un MFR₂ inférieur à 0,80 g/10 minutes (selon ISO 1133 à 190 °C et à une charge de 2,16 kg), et
- un composé retardateur de vulcanisation prématurée ; tel que défini dans l'une quelconque des revendications précédentes 1 à 12 ; de préférence un processus pour produire :
(i) un câble (A), dans lequel le processus comprend les étapes
- d'application sur un conducteur, de préférence par (co)extrusion, d'au moins une couche isolante comprenant une composition de polymère qui comprend
- une polyoléfine pouvant être réticulée (a) portant des unités contenant un ou des groupe(s) silane hydrolysable(s) et ayant un MFR₂ inférieur à 0,80 g/10 minutes (selon ISO 1133 à 190 °C et à une charge de 2,16 kg), et
- un composé retardateur de vulcanisation prématurée ; tel que défini dans l'une quelconque des revendications précédentes 1 à 12 ; ou
(ii) un câble (B), dans lequel le processus comprend les étapes
- d'application sur un conducteur, de préférence par (co)extrusion, d'une couche semiconductrice intérieure comprenant une première composition semiconductrice, une couche isolante comprenant une composition isolante et une couche semiconductrice extérieure comprenant une seconde composition semiconductrice, dans cet ordre, dans lesquelles la composition d'au moins une couche, de préférence au moins la composition isolante de la couche isolante comprend la composition de polymère qui comprend
- une polyoléfine pouvant être réticulée (a) portant des unités contenant un ou des groupe(s) silane hydrolysable(s) et ayant un MFR₂ inférieur à 0,80 g/10 minutes (selon ISO 1133 à 190 °C et à une charge de 2,16 kg), et
- un composé retardateur de vulcanisation prématurée ; tel que défini dans l'une quelconque des revendications précédentes 1 à 12.

16. Processus selon la revendication 15 pour produire un câble réticulé, dans lequel le processus comprend une étape supplémentaire de
- réticulation de l'au moins une couche obtenue comprenant la composition de polymère telle que définie dans l'une quelconque des revendications précédentes 1 à 12 en présence d'un catalyseur de condensation au silanol et d'eau, de préférence pour produire :
(i) un câble réticulé (A), dans lequel le processus comprend une étape supplémentaire de :
- réticulation de la composition isolante de la couche isolante obtenue du câble (A) en présence d'un catalyseur de condensation au silanol et d'eau, ou
(ii) un câble réticulé (B), dans lequel le processus comprend une étape supplémentaire de :
- réticulation d'au moins une de la composition isolante de la couche isolante, de la première composition semiconductrice de la couche semiconductrice intérieure ou de la seconde composition semiconductrice de la couche semiconductrice extérieure du câble obtenu (B) en présence d'un catalyseur de condensation au silanol et d'eau ; de préférence réticulation d'au moins la composition isolante de la couche isolante du câble (B), dans laquelle ladite composition isolante comprend la composition de polymère telle que définie dans l'une quelconque des revendications précédentes 1 à 12.

17. Câble réticulé que l'on peut obtenir par le processus selon la revendication 16.

18. Utilisation d'une polyoléfine pouvant être réticulée (a) portant des unités contenant un ou des groupe(s) silane hydrolysable(s) et ayant un MFR₂ inférieur à 0,80 g/10 minutes tel que défini dans l'une quelconque des revendications 1, 2, 4 à 9 pour augmenter la vitesse de réticulation d'une composition de polymère pouvant être réticulée au silane.
